# EUROPEAN PATENT APPLICATION

(11) **EP 4 576 704 A1**
(43) Date of publication of application: **25.06.2025**
(21) Application number: 23867270.3
(22) Date of filing: 04.09.2023
(51) Int. Cl.: H04L 41/12

(54) **SYSTEM, AND NETWORK TOPOLOGY METHOD AND ELECTRONIC DEVICE THEREFOR**

(30) Priority: 22.09.2022 CN 202211157063
(71) Applicant: Huawei Technologies Co., Ltd., Shenzhen, Guangdong 518129 (CN)
(72) Inventor: YAN, Zhongjiang, Xi'an, Shaanxi 710072 (CN); HOU, Weibo, Shenzhen, Guangdong 518129 (CN); LI, Jie, Shenzhen, Guangdong 518129 (CN); HOU, Xuanzhe, Shenzhen, Guangdong 518129 (CN); LI, Bo, Xi'an, Shaanxi 710072 (CN); YANG, Mao, Xi'an, Shaanxi 710072 (CN); TAN, Yanying, Shenzhen, Guangdong 518129 (CN); WANG, Kaixin, Shenzhen, Guangdong 518129 (CN)
(74) Representative: Gill Jennings & Every LLP
(86) International application number: PCT/CN2023/116728
(87) International publication number: WO 2024/060979

(57) **Abstract**

Embodiments of this application provide a system, a network topology method, and an electronic device therefor. The system includes a first electronic device and a second electronic device. The first electronic device is connected to the second electronic device. The second electronic device is configured to send a first heartbeat packet. The first electronic device is configured to receive the first heartbeat packet. When determining that a network adapter for receiving the first heartbeat packet is a domain head network adapter, the first electronic device is further configured to update a one-hop neighbor table and a two-hop neighbor table of the first electronic device based on the first heartbeat packet. **In** embodiments of this application, after receiving the first heartbeat packet, the first electronic device may update network topology information based on a type of the network adapter for receiving the first heartbeat packet, so that the first electronic device can accurately construct a network topology diagram, and the constructed network topology diagram can truly reflect a type of a link between electronic devices.

## Description

This application claims priority to Chinese Patent Application No. 202211157063.9, filed with the China National Intellectual Property Administration on September 22, 2022 and entitled "SYSTEM, NETWORK TOPOLOGY METHOD, AND ELECTRONIC DEVICE THEREFOR", which is incorporated herein by reference in its entirety.

### TECHNICAL FIELD

Embodiments of this application relate to the field of network technologies, and more specifically, to a system, a network topology method, and an electronic device therefor.

### BACKGROUND

With the progress of technologies, there are more electronic devices in a plurality of scenarios such as a home scenario and an industrial scenario. To avoid air interface interference and resource contention problems of the electronic devices, a network topology diagram of a networking relationship between the electronic devices needs to be established. However, during establishment of an existing network topology diagram of a networking relationship between electronic devices, roles of network adapters cannot be distinguished and some radio links in the network topology diagram cannot be established, and consequently a real networking relationship cannot be reflected.

### SUMMARY

Embodiments of this application provide a system, a network topology method, and an electronic device therefor.

According to a first aspect, a system is provided. The system includes a first electronic device and a second electronic device, and the first electronic device is connected to the second electronic device. The second electronic device is configured to send a first heartbeat packet; the first electronic device is configured to receive the first heartbeat packet; and the first electronic device determines that a network adapter for receiving the first heartbeat packet is a domain head network adapter, and is further configured to update a one-hop neighbor table and a two-hop neighbor table of the first electronic device based on the first heartbeat packet, where the domain head network adapter is a network adapter of a root node in a network topology.

In this embodiment of this application, after receiving the heartbeat packet, the electronic device may update network topology information based on a type of the network adapter for receiving the heartbeat packet, so that the electronic device can accurately construct a network topology diagram, and the constructed network topology diagram can truly reflect a type of a link between electronic devices.

With reference to the first aspect, in some implementations of the first aspect, the first electronic device determines that the network adapter used by the first electronic device to receive the first heartbeat packet is a non-domain head network adapter, and is further configured to update a one-hop neighbor table of the first electronic device based on the first heartbeat packet.

With reference to the first aspect, in some implementations of the first aspect, when the first electronic device determines that the first electronic device is a central control node, the first electronic device is further configured to update a global network topology information table based on the first heartbeat packet, where the central control node is a node configured to establish the network topology.

With reference to the first aspect, in some implementations of the first aspect, the system further includes a third electronic device, the second electronic device is connected to the third electronic device, a network adapter used by the third electronic device to send and receive a heartbeat packet is a non-domain head network adapter, the non-domain head network adapter is a network adapter of a leaf node in the network topology, a network adapter used by the second electronic device to send and receive a heartbeat packet is a non-domain head network adapter, and domain addresses of the second electronic device and the third electronic device are different. The third electronic device is configured to send a second heartbeat packet; the second electronic device is further configured to receive the second heartbeat packet; the second electronic device is further configured to update a one-hop neighbor table of the second electronic device based on the second heartbeat packet, and determine that a role of the second electronic device is a key node, where the key node is a role in a cross-domain connection; the third electronic device is further configured to receive the first heartbeat packet; and the third electronic device is further configured to update a one-hop neighbor table of the third electronic device based on the first heartbeat packet, and determine that a role of the third electronic device is a key node.

With reference to the first aspect, in some implementations of the first aspect, the first electronic device is further configured to send a third heartbeat packet; the second electronic device is further configured to receive the third heartbeat packet, and update the one-hop neighbor table of the second electronic device based on the third heartbeat packet; the first electronic device is further configured to send a fourth heartbeat packet after sending the third heartbeat packet; the second electronic device is further configured to receive the fourth heartbeat packet; and the second electronic device is further configured to update the one-hop neighbor table of the second electronic device based on the fourth heartbeat packet, and forward the fourth heartbeat packet through flooding.

In embodiments of this application, a role of an electronic device is defined. When the role of the electronic device is a key node, and a received heartbeat packet is a domain information heartbeat packet, the electronic device may forward the heartbeat packet through flooding, rather than all heartbeat packets are forwarded through flooding and all electronic devices forward a heartbeat packet through flooding, so that air interface resources are saved.

With reference to the first aspect, in some implementations of the first aspect, the system further includes a fourth electronic device, the third electronic device is connected to the fourth electronic device, a network adapter used by the fourth electronic device to receive and send a heartbeat packet is a domain head network adapter, and the fourth electronic device is configured to send a fifth heartbeat packet; the third electronic device is further configured to receive the fifth heartbeat packet; the third electronic device is further configured to update the one-hop neighbor table of the third electronic device based on the fifth heartbeat packet; the fourth electronic device is further configured to send a sixth heartbeat packet after sending the fifth heartbeat packet; the third electronic device is further configured to receive the sixth heartbeat packet; and the third electronic device is further configured to update the one-hop neighbor table of the third electronic device based on the sixth heartbeat packet, and forward the sixth heartbeat packet through flooding.

With reference to the first aspect, in some implementations of the first aspect, the first electronic device is the central control node, and the second electronic device is further configured to receive the sixth heartbeat packet forwarded by the third electronic device through flooding; the second electronic device is further configured to forward the sixth heartbeat packet through flooding; the first electronic device is further configured to receive the sixth heartbeat packet forwarded by the second electronic device through flooding; and the first electronic device is further configured to update the global network topology information table of the first electronic device based on the sixth heartbeat packet, and forward the sixth heartbeat packet through flooding.

According to a second aspect, a network topology method is provided. The method includes:
a first electronic device receives a first heartbeat packet; and the first electronic device determines that a network adapter for receiving the first heartbeat packet is a domain head network adapter, and updates a one-hop neighbor table and a two-hop neighbor table of the first electronic device based on the first heartbeat packet, where the domain head network adapter is a network adapter of a root node in a network topology.

With reference to the second aspect, in some implementations of the second aspect, when the first electronic device determines that the first electronic device is a central control node, where the central control node is a node configured to establish the network topology, the method further includes:
the first electronic device updates the one-hop neighbor table, the two-hop neighbor table, and a global network topology information table of the first electronic device based on the first heartbeat packet.

With reference to the second aspect, in some implementations of the second aspect, the network adapter used by the first electronic device to receive the first heartbeat packet is the domain head network adapter, and the method further includes: The first electronic device receives a sixth heartbeat packet, where the sixth heartbeat packet is a heartbeat packet forwarded by a second electronic device through flooding; and the first electronic device updates the global network topology information table of the first electronic device based on the sixth heartbeat packet, and forwards the sixth heartbeat packet through flooding.

In embodiments of this application, a role of an electronic device is defined. When the role of the electronic device is a key node, and a received heartbeat packet is a domain information heartbeat packet, the electronic device may forward the heartbeat packet through flooding, rather than all heartbeat packets are forwarded through flooding and all electronic devices forward a heartbeat packet through flooding, so that air interface resources are saved.

With reference to the second aspect, in some implementations of the second aspect, when the first electronic device determines that the network adapter for receiving the first heartbeat packet is a non-domain head network adapter, the first heartbeat packet is a heartbeat packet sent by a second electronic device by using the non-domain head network adapter, the non-domain head network adapter is a network adapter of a leaf node in the network topology, the first electronic device is connected to the second electronic device, and domain addresses of the first electronic device and the second electronic device are different; and the method further includes: The first electronic device determines that a role of the first electronic device is a key node, where the key node is a role in a cross-domain connection.

With reference to the second aspect, in some implementations of the second aspect, the method further includes: The first electronic device receives a seventh heartbeat packet, where the seventh heartbeat packet is a heartbeat packet sent by a fifth electronic device by using a domain head network adapter, and the first electronic device is connected to the fifth electronic device; and if the seventh heartbeat packet is a heartbeat packet sent by the fifth electronic device and received by the first electronic device for the first time, the first electronic device updates the one-hop neighbor table of the first electronic device based on the seventh heartbeat packet.

With reference to the second aspect, in some implementations of the second aspect, the method further includes: The first electronic device receives an eighth heartbeat packet, where the eighth heartbeat packet is a heartbeat packet sent by the fifth electronic device by using a domain head network adapter after the seventh heartbeat packet is sent; and the first electronic device updates the one-hop neighbor table of the first electronic device based on the eighth heartbeat packet, and forwards the eighth heartbeat packet through flooding.

With reference to the second aspect, in some implementations of the second aspect, the method further includes: The first electronic device receives a ninth heartbeat packet, where the ninth heartbeat packet is a heartbeat packet forwarded through flooding; and the first electronic device forwards the ninth heartbeat packet through flooding.

With reference to the second aspect, in some implementations of the second aspect, that the first electronic device determines that a network adapter for receiving the first heartbeat packet is a domain head network adapter, and updates a one-hop neighbor table and a two-hop neighbor table of the first electronic device based on the first heartbeat packet includes: The first electronic device determines that the network adapter for receiving the first heartbeat packet is the domain head network adapter and a preset condition is met, and updates the one-hop neighbor table and the two-hop neighbor table of the first electronic device based on the first heartbeat packet.

With reference to the second aspect, in some implementations of the second aspect, the preset condition includes that the first electronic device receives the first heartbeat packet for the first time, and further includes one of the following: The network adapter used by the first electronic device to receive the first heartbeat packet is an access point AP network adapter, a network adapter for sending the first heartbeat packet is a station STA network adapter, and a source network adapter media access control MAC address in the first heartbeat packet has been associated with a STA list of the AP network adapter of the first electronic device; or the network adapter used by the first electronic device to receive the first heartbeat packet is a master master network adapter, a network adapter for sending the first heartbeat packet is a slave slave network adapter, and a source network adapter MAC address in the first heartbeat packet has been associated with a slave list of the first electronic device; or the network adapter used by the first electronic device to receive the first heartbeat packet is a STA network adapter, a network adapter for sending the first heartbeat packet is an AP network adapter, and a source network adapter MAC address in the first heartbeat packet is the same as a MAC address of an AP network adapter associated with the STA network adapter of the first electronic device; or the network adapter used by the first electronic device to receive the first heartbeat packet is a slave network adapter, a network adapter for sending the first heartbeat packet is a master network adapter, and a source network adapter MAC address in the first heartbeat packet is the same as a MAC address of a master network adapter associated with the slave network adapter of the first electronic device; or the network adapter used by the first electronic device to receive the first heartbeat packet is a STA network adapter, and a network adapter for sending the first heartbeat packet is a STA network adapter.

According to a third aspect, an embodiment of this application provides an electronic device. The electronic device includes modules/units for performing the method according to any one of the foregoing aspects or the possible designs of the foregoing aspects. The modules/units may be implemented by hardware, or may be implemented by hardware executing corresponding software.

According to a fourth aspect, an embodiment of this application provides an electronic device. The electronic device includes one or more processors and one or more memories. The one or more memories store one or more computer programs, the one or more computer programs include instructions, and when the instructions are executed by the one or more processors, any one of the foregoing aspects or the possible implementations of the foregoing aspects is performed.

According to a fifth aspect, an embodiment of this application provides a chip. The chip is coupled to a memory in an electronic device, and is configured to invoke a computer program stored in the memory and perform the technical solutions according to any one of the foregoing aspects and the possible designs of the foregoing aspects in embodiments of this application. In embodiments of this application, "coupling" means that two components are directly or indirectly combined with each other.

According to a sixth aspect, an embodiment of this application provides a computer-readable storage medium. The computer-readable storage medium includes a computer program. When the computer program is run on an electronic device, the electronic device is enabled to perform the technical solutions according to any one of the foregoing aspects and the possible designs of the foregoing aspects.

According to a seventh aspect, an embodiment of this application provides a computer program. The computer program includes instructions. When the instructions are run on a computer, the computer is enabled to perform the technical solutions according to any one of the foregoing aspects and the possible designs of the foregoing aspects.

For beneficial effects of the third aspect to the seventh aspect, refer to the beneficial effects of the first aspect and the second aspect. Details are not described again.

### BRIEF DESCRIPTION OF DRAWINGS

FIG. 1 is a diagram of an architecture of an example communication system applicable to an embodiment of this application;
FIG. 2 is a network topology diagram;
FIG. 3 is a diagram of a hardware structure of an electronic device according to an embodiment of this application;
FIG. 4 is a block diagram of a software structure of an electronic device according to an embodiment of this application;
FIG. 5 is a diagram of a key node and a non-key node according to an embodiment of this application;
FIG. 6 is a diagram of a packet format of a local heartbeat packet according to an embodiment of this application;
FIG. 7 is a diagram of a packet format of a domain information heartbeat packet according to an embodiment of this application;
FIG. 8A and FIG. 8B are an interaction diagram of a system according to an embodiment of this application;
FIG. 9 is a schematic flowchart of a network topology method according to an embodiment of this application;
FIG. 10 is a schematic flowchart of a network topology method according to an embodiment of this application;
FIG. 11 is a diagram of a structure of an electronic device according to an embodiment of this application; and
FIG. 12 is a diagram of a structure of an electronic device according to an embodiment of this application.

### DESCRIPTION OF EMBODIMENTS

The following describes technical solutions in embodiments of this application with reference to the accompanying drawings in embodiments of this application. In the descriptions of embodiments of this application, "/" means "or", unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the description in embodiments of this application, "a plurality of" means two or more than two.

The following terms "first" and "second" are merely used for description, but should not be understood as indicating or implying relative importance or implying a quantity of indicated technical features. Therefore, a feature limited by "first" or "second" may explicitly or implicitly include one or more features. In descriptions of the embodiments, unless otherwise stated, "a plurality of" means two or more.

To help understand embodiments of this application, a communication system applicable to the method provided in embodiments of this application is first described.

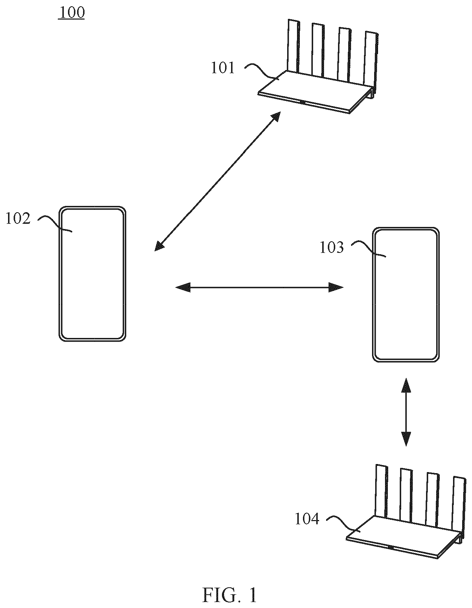

FIG. 1 is a diagram of an architecture of a communication system 100 applicable to an embodiment of this application.

For example, as shown in FIG. 1, the communication system 100 includes an electronic device 101, an electronic device 102, an electronic device 103, and an electronic device 104. The electronic device 101 is connected to the electronic device 102, the electronic device 102 is connected to the electronic device 103, and the electronic device 103 is connected to the electronic device 104.

A type of the electronic device is not limited in embodiments of this application. For example, the electronic device may be a mobile phone, a router, a wireless headset, a smart television, or a tablet computer.

For another example, the electronic device in embodiments of this application may be an industrial device, for example, a machine tool, a mechanical device, or an instrument.

A manner for communication between electronic devices is not limited in embodiments of this application. For example, the electronic device 101 may communicate with the electronic device 102 through a wireless fidelity (wireless fidelity, Wi-Fi) network.

In another example, the electronic device 102 may communicate with the electronic device 103 through Bluetooth.

In embodiments of this application, the electronic device includes a hardware layer, an operating system layer running above the hardware layer, and an application layer running above the operating system layer. The hardware layer includes hardware such as a central processing unit (central processing unit, CPU), a memory management unit (memory management unit, MMU), and memory (also referred to as main memory). The operating system may be any one or more computer operating systems that implement service processing by using a process (process), for example, a Linux operating system, a Unix operating system, an Android operating system, an iOS operating system, a Windows operating system, or a Harmony operating system. The application layer includes applications such as a browser, an address book, word processing software, and instant communication software. In addition, a specific structure of an execution body of a method provided in embodiments of this application is not specifically limited in embodiments of this application, provided that a program that records code for the method provided in embodiments of this application can be run to perform communication according to the method provided in embodiments of this application. For example, the execution body of the method provided in embodiments of this application may be an electronic device, or a functional module that can invoke and execute a program in an electronic device.

It should be noted that the communication system 100 shown in FIG. 1 is merely an example, and should not constitute a limitation on this application. For example, the communication system 100 may alternatively include more or fewer electronic devices.

Each electronic device in the communication system 100 shown in FIG. 1 may periodically broadcast and send a heartbeat packet to establish a network topology diagram. The following uses devices in FIG. 1 as an example for description.

The electronic device 101 may periodically broadcast and send a heartbeat packet #1, where the heartbeat packet #1 includes identification information indicating the electronic device 101. After receiving the heartbeat packet #1 sent by the electronic device 101, if determining, based on a sequence number of the heartbeat packet #1, that the heartbeat packet #1 is a heartbeat packet received for the first time, the electronic device 102 may determine that the electronic device #1 is a one-hop neighbor, and the electronic device 102 may forward the heartbeat packet #1 through flooding. Similarly, after receiving, for the first time, the heartbeat packet #1 sent by the electronic device 101, the electronic device 103 and the electronic device 104 may also use the electronic device as a one-hop neighbor, and forward the heartbeat packet #1 through flooding.

Similarly, the electronic device 102, the electronic device 103, or the electronic device 104 may also periodically broadcast and send a heartbeat packet, so that after receiving the heartbeat packet for the first time, another electronic device may use the electronic device that sends the heartbeat packet as a one-hop neighbor.

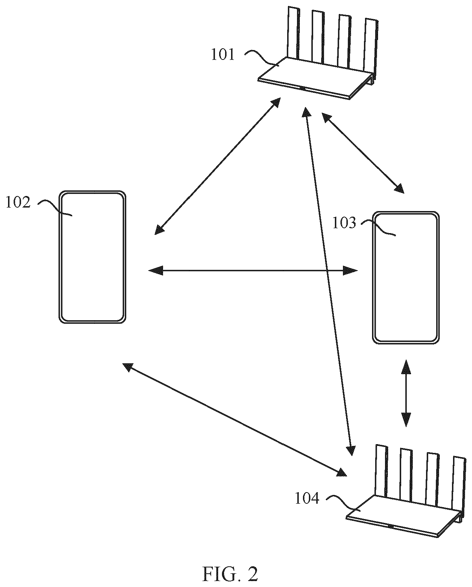

According to the foregoing process, a network topology diagram in FIG. 2 may be obtained. As shown in FIG. 2, a communication link is established between every two of the electronic device 101, the electronic device 102, the electronic device 103, and the electronic device 104. However, with reference to the communication system 100 shown in FIG. 1, the electronic device 101 actually does not establish a communication link with the electronic device 103 or the electronic device 104, that is, data cannot be transmitted between the electronic device 101 and the electronic device 103 or the electronic device 104. Therefore, a network topology diagram established based on a heartbeat packet periodically sent by an electronic device cannot truly reflect a networking relationship in a network. In addition, all heartbeat packets need to be forwarded through flooding in the foregoing process. Consequently, flooding consumption is large, and air interface resources are wasted. Based on this, an embodiment of this application provides a network topology method. A network topology diagram established according to the method can truly reflect a link between electronic devices, and a heartbeat packet can be selectively forwarded through flooding based on a type of the heartbeat packet, so that air interface resources are saved.

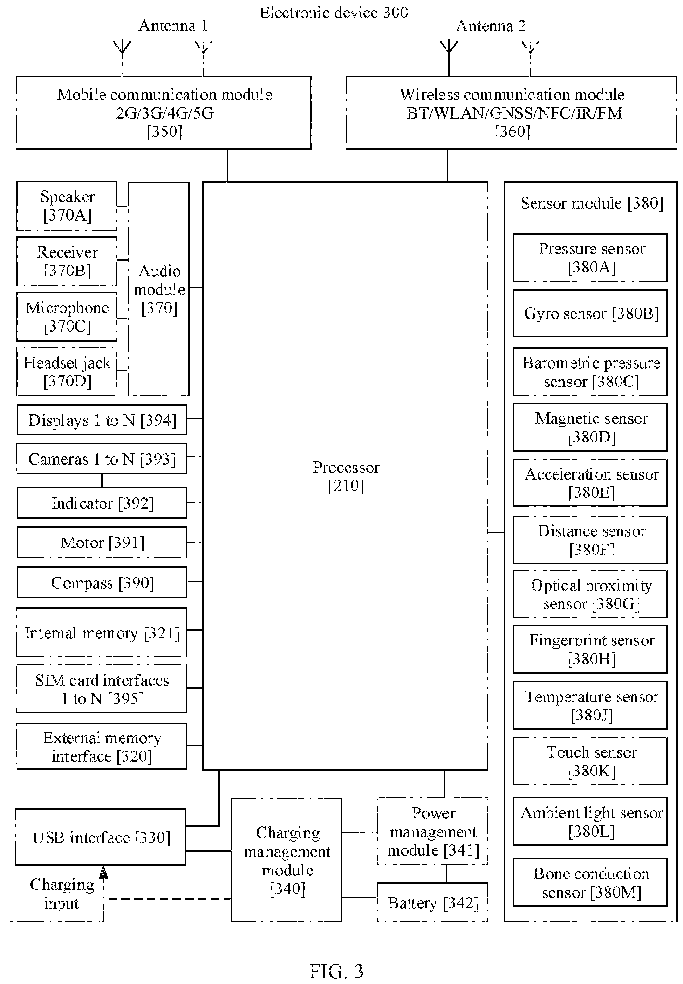

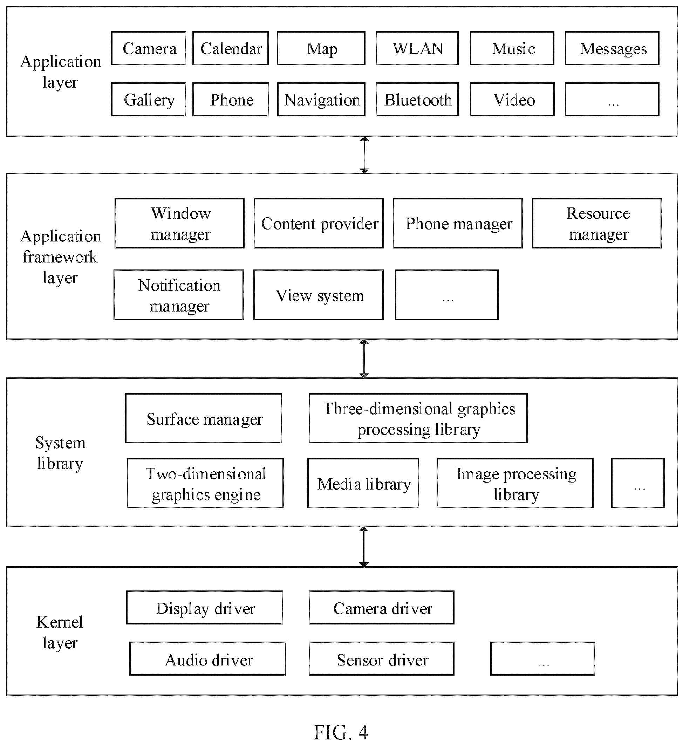

The following describes a structure of an electronic device in embodiments of this application with reference to FIG. 3 and FIG. 4.

For example, FIG. 3 is a diagram of a structure of an electronic device 300. The electronic device 300 may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identity module (subscriber identity module, SIM) card interface 395, and the like.

A type of a sensor included in the sensor module 280 is not limited in embodiments of this application. For example, the sensor module 380 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor 1, and the like.

It may be understood that the structure shown in this embodiment of this application does not constitute a specific limitation on the electronic device 300. In some other embodiments of this application, the electronic device 300 may include more or fewer components than those shown in the figure, or combine some components, or split some components, or have different component arrangements. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 300. The controller may generate an operation control signal based on instruction operation code and a time sequence signal, to complete control of instruction fetching and instruction execution.

A memory may be further disposed in the processor 310, to store instructions and data. In some embodiments, the memory in the processor 310 is a cache. The memory may store instructions or data just used or cyclically used by the processor 310. If the processor 310 needs to use the instructions or data again, the instructions or data may be directly invoked from the memory. This avoids repeated access, and reduces waiting time of the processor 310, so that system efficiency is improved.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that the interface connection relationship between the modules shown in this embodiment of this application is merely an example, and does not constitute a limitation on the structure of the electronic device 300. In some other embodiments of this application, the electronic device 300 may alternatively use an interface connection manner different from that in the foregoing embodiment, or a combination of a plurality of interface connection manners.

A wireless communication function of the electronic device 300 may be implemented by using the antenna 1, the antenna 2, the mobile communication module 350, the wireless communication module 360, the modem processor, the baseband processor, and the like.

The antenna 1 and the antenna 2 are configured to transmit and receive electromagnetic wave signals. Each antenna in the electronic device 300 may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The mobile communication module 350 may provide a solution for wireless communication, including 2G/3G/4G/5G and the like, that is applied to the electronic device 300. The mobile communication module 350 may include at least one filter, a switch, a power amplifier, a low noise amplifier (low noise amplifier, LNA), and the like. The mobile communication module 350 may receive an electromagnetic wave by using the antenna 1, perform processing such as filtering and amplification on the received electromagnetic wave, and send a processed electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules of the mobile communication module 350 may be disposed in the processor 310. In some embodiments, at least some functional modules of the mobile communication module 350 may be disposed in a same component as at least some modules of the processor 310.

The wireless communication module 360 may provide a solution for wireless communication that is applied to the electronic device 300 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 360 may be one or more components that integrate at least one communication processing module. The wireless communication module 360 receives an electromagnetic wave through the antenna 2, performs frequency modulation and filtering on an electromagnetic wave signal, and sends a processed signal to the processor 310. The wireless communication module 360 may further receive a to-be-sent signal from the processor 310, perform frequency modulation and amplification on the to-be-sent signal, and convert the to-be-sent signal into an electromagnetic wave for radiation through the antenna 2.

In some embodiments, in the electronic device 300, the antenna 1 is coupled to the mobile communication module 350, and the antenna 2 is coupled to the wireless communication module 360, so that the electronic device 300 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The external memory interface 320 may be configured to connect to an external memory card, such as a micro SD card, to extend a storage capability of the electronic device 300. The external memory card communicates with the processor 310 through the external memory interface 320, to implement a data storage function.

The internal memory 321 may be configured to store computer executable program code, where the executable program code includes instructions. The processor 310 performs various function applications and data processing of the electronic device 300 by running the instructions stored in the internal memory 321. The internal memory 321 may include a program storage area and a data storage area. The program storage area may store an operating system, an app required by at least one function (for example, a sound play function or an image play function), and the like. The data storage area may store data (such as audio data or a phone book) created in a use process of the electronic device 300. In addition, the internal memory 321 may include a highspeed random access memory, and may further include a non-volatile memory, such as at least one magnetic disk storage component, a flash memory component, and a universal flash storage (universal flash storage, UFS).

A software system of the electronic device 300 may use a layered architecture, an event-driven architecture, a microkernel architecture, a micro-service architecture, or a cloud architecture. In this embodiment of this application, an Android^{®} system with a layered architecture is used as an example to describe the software structure of the electronic device 300.

FIG. 4 is a block diagram of a software structure of the electronic device 300 according to an embodiment of this application. In the layered architecture, software is divided into several layers, and each layer has a clear role and task. The layers communicate with each other through a software interface. In some embodiments, the Android^{®} system is divided into four layers: an application layer, an application framework layer, an Android runtime (Android runtime) and system library, and a kernel layer from top to bottom. The application layer may include a series of application packages.

As shown in FIG. 4, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for applications at the application layer. The application framework layer includes some predefined functions.

As shown in FIG. 4, the application framework layer may include a window manager, a content provider, a view system, a phone manager, a resource manager, a notification manager, and the like.

The window manager is configured to manage window programs. The window manager may obtain a display size, determine whether there is a status bar, lock a screen, take a screenshot, and the like.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The phone manager is configured to provide a communication function of the electronic device 300, for example, call status management (including accepting and declining).

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, an alert tone is made, the terminal device vibrates, or an indicator blinks.

The Android runtime includes a core library and a virtual machine. The Android runtime is responsible for scheduling and management of the Android system.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library can support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to operating systems such as Android^{®}, iOS^{®}, and HarmonyOS^{®}.

Before a network topology method provided in embodiments of this application is described, several concepts introduced in embodiments of this application are first described.

Network adapter type: In a Wi-Fi connection, a wireless network adapter that is of an electronic device and that works in an access point (access point, AP) mode may be determined as an AP network adapter, and a wireless network adapter working in a station (station, STA) mode may be determined as a STA network adapter. The AP network adapter can provide a wireless access service, that is, access to the STA network adapter. The STA network adapter may be connected to the AP network adapter, and may also be connected to another STA network adapter. In a Bluetooth connection, a Bluetooth network adapter that is of an electronic device and that works in a master (master) mode may be determined as a master network adapter, and a Bluetooth network adapter working in a slave (slave) mode may be determined as a slave network adapter. The master network adapter can provide a Bluetooth access service, that is, access to the slave network adapter.

Domain head network adapter: In embodiments of this application, a network adapter of a root node in a network topology may be referred to as a domain head network adapter. For example, an AP network adapter and a master network adapter are domain head network adapters. The domain head network adapter may obtain a media access control (media access control, MAC) address of a non-domain head network adapter connected to the domain head network adapter.

Non-domain head network adapter: In embodiments of this application, a network adapter of a leaf node in a network topology may be referred to as a non-domain head network adapter. For example, a STA network adapter and a slave network adapter are referred to as non-domain head network adapters. The non-domain head network adapter may obtain a MAC address of a domain head network adapter connected to the non-domain head network adapter.

Link type: Link types in embodiments of this application include an AP-STAlink, a P2P link, and a master-slave link. The AP-STA link is a link connecting an AP network adapter to a STA network adapter. The P2P link is a link connecting two STA network adapters, and may also be referred to as a STA-STA link. The master-slave link is a link connecting a master network adapter to a slave network adapter.

Node role: In embodiments of this application, electronic devices may be classified into different node roles. Node roles in embodiments of this application include a central control node, a key node, and a non-key node. The communication system shown in FIG. 1 is used as an example. In embodiments of this application, any one of the electronic device 101, the electronic device 102, the electronic device 103, and the electronic device 104 may be determined as a central control node, and the central control node is configured to establish a network topology diagram. In embodiments of this application, an electronic device including a domain head network adapter or an electronic device connected across domains is referred to as a key node, and an electronic device that includes a non-domain head network adapter and that cannot be connected across domains is referred to as a non-key node. For descriptions of a cross-domain connection, refer to the following. Details are not described herein.

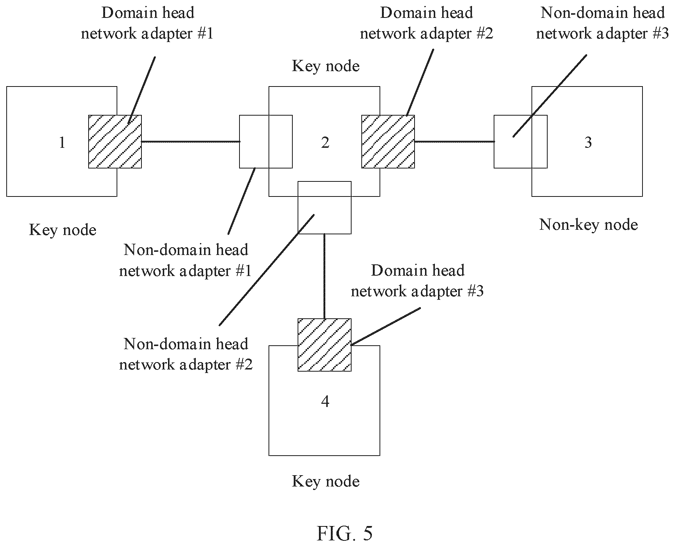

FIG. 5 is a diagram of a key node and a non-key node according to an embodiment of this application. As shown in FIG. 5, a node 1 includes a domain head network adapter #1, a node 2 includes a domain head network adapter #2, a non-domain head network adapter #1, and a non-domain head network adapter #2, a node #3 includes a non-domain head network adapter #3, and a node 4 includes a domain head network adapter #4. It can be learned from the foregoing description that because the node 1, the node 2, and the node 4 include the domain head network adapters, the node 1, the node 2, and the node 4 are key nodes, and because the node 3 includes only the non-domain head network adapter and is not connected across domains, the node 3 is a non-key node.

For ease of description, in the following description, an example in which each node includes one network adapter is used, but this should not be construed as a limitation on embodiments of this application. A central control node includes a global network topology information table, a one-hop neighbor table, and a two-hop neighbor table. A key node includes a one-hop neighbor table and a two-hop neighbor table. A non-key node includes a one-hop neighbor table.

The one-hop neighbor table includes at least one of the following information: a neighbor node identifier (identity document, ID) and a neighbor node MAC address. In addition, in some embodiments, the one-hop neighbor table may further include at least one of a neighbor node network adapter type and neighbor node timeout time.

The two-hop neighbor table includes a two-hop neighbor node array and an adjacency table of a two-hop neighbor node. The two-hop neighbor node array includes IDs of all one-hop neighbor nodes and IDs of all two-hop neighbor nodes of a node. The adjacency table of the two-hop neighbor node is a square matrix, a quantity of dimensions of the square matrix is a total quantity of one-hop neighbor nodes and two-hop neighbor nodes, a row position and a column position of a non-zero element in the adjacency table correspond to a position in the two-hop neighbor node array, in other words, an ID of a one-hop neighbor node and an ID of a two-hop neighbor node of the node may be determined by using the row position and the column position of the non-zero element, and the non-zero element may indicate a type of a link between the one-hop neighbor node and the two-hop neighbor node.

For example, the communication system 100 shown in FIG. 1 is used as an example. It is assumed that a node ID of the electronic device 101 is A, a network adapter of the electronic device 101 is an AP network adapter, a node ID of the electronic device 102 is B, a network adapter of the electronic device 102 is a STA network adapter, a node ID of the electronic device 103 is C, a network adapter of the electronic device 103 is a STA network adapter, a node ID of the electronic device is D, and a network adapter of the electronic device is an AP network adapter. A networking relationship between the foregoing electronic devices is shown above. Table 1 shows a two-hop neighbor table of the electronic device 101. In Table 1, a link type may be indicated by using two bits. For example, 01 may indicate an AP-STA link, 10 may indicate a STA-STA link, and 11 may indicate a master-slave link. It can be learned from Table 1 that a two-hop neighbor node array of the electronic device 101 includes [B, C], a type of a link between the electronic device 101 and the electronic device 102 is an AP-STA link, and a type of a link between the electronic device 102 and the electronic device 103 is a STA-STA link. Therefore, it can be learned from Table 1 that a one-hop neighbor of the electronic device 101 is the electronic device 102, a link type is an AP-STAlink, a two-hop neighbor of the electronic device 101 is the electronic device 103, and a type of a link between the one-hop neighbor electronic device 102 and the two-hop neighbor electronic device 103 is a STA-STA link.

**Table 1: Two-hop neighbor table of the electronic device 101**

| | A | B | C |
|---|---|---|---|
| A | 0 | 01 | 0 |
| B | 01 | 0 | 10 |
| C | 0 | 10 | 0 |

The global network topology information table includes a global node ID array and a network topology adjacency table. The global node ID array includes IDs of all nodes. The network topology adjacency table is a square matrix, a quantity of dimensions of the square matrix is a quantity of all nodes. A row position and a column position of a non-zero element in the network topology adjacency table correspond to a position in the global node ID array, and the non-zero element may indicate a type of a link between nodes.

For example, the communication system 100 shown in FIG. 1 is used as an example. It is assumed that a node ID of the electronic device 101 is A, a network adapter of the electronic device 101 is an AP network adapter, a node ID of the electronic device 102 is B, a network adapter of the electronic device 102 is a STA network adapter, a node ID of the electronic device 103 is C, a network adapter of the electronic device 103 is a STA network adapter, a node ID of the electronic device is D, and a network adapter of the electronic device is an AP network adapter. A networking relationship between the foregoing electronic devices is shown above, and the electronic device 101 is a central control node. Table 2 shows a global network topology information table of the electronic device 101. In Table 2, a link type may be indicated by using two bits. For example, 01 may indicate an AP-STA link, 10 may indicate a STA-STA link, and 11 may indicate a master-slave link. It can be learned from Table 2 that a global node ID array includes [A, B, C, D], a type of a link between the electronic device 101 and the electronic device 102 is an AP-STA link, a type of a link between the electronic device 102 and the electronic device 103 is a STA-STA link, and a type of a link between the electronic device 103 and the electronic device 104 is an AP-STA link. In addition, a one-hop neighbor of the electronic device 101 is the electronic device 102, and a two-hop neighbor of the electronic device 101 is the electronic device 103; one-hop neighbors of the electronic device 102 is the electronic device 101 and the electronic device 103, and a two-hop neighbor of the electronic device 102 is the electronic device 104; one-hop neighbors of the electronic device 103 is the electronic device 102 and the electronic device 104, and a two-hop neighbor of the electronic device 103 is the electronic device 101; and a one-hop neighbor of the electronic device 104 is the electronic device 103, and a two-hop neighbor of the electronic device 104 is the electronic device 102. A networking relationship between the electronic devices in FIG. 1 can be truly reflected by using a global network topology information table.

**Table 2: Global network topology information table of the electronic device 101**

| | A | B | C | D |
|---|---|---|---|---|
| A | 0 | 01 | 0 | 0 |
| B | 01 | 0 | 10 | 0 |
| C | 0 | 10 | 0 | 01 |
| D | 0 | 0 | 01 | 0 |

During initialization, a node with a non-domain head network adapter does not have a two-hop neighbor table, two-hop neighbor node data in a two-hop neighbor table of a node with a domain head network adapter includes an ID of the local node, and a quantity of non-zero elements in a two-hop adjacency table is 0. A global node ID array of a central control node includes a local node ID, and a quantity of non-zero elements in a network topology adjacency table is 0.

Type of a heartbeat packet: Types of heartbeat packets in embodiments of this application include a local heartbeat packet and a domain information heartbeat packet. All network adapters may periodically send a local heartbeat packet, a domain head network adapter may periodically send a domain information heartbeat packet, and a key node may forward a received domain information heartbeat packet through flooding. Domain information heartbeat packets include a non-forwarded domain information heartbeat packet and a forwarded domain information heartbeat packet. The following describes packet formats of the local heartbeat packet and the domain information heartbeat packet.

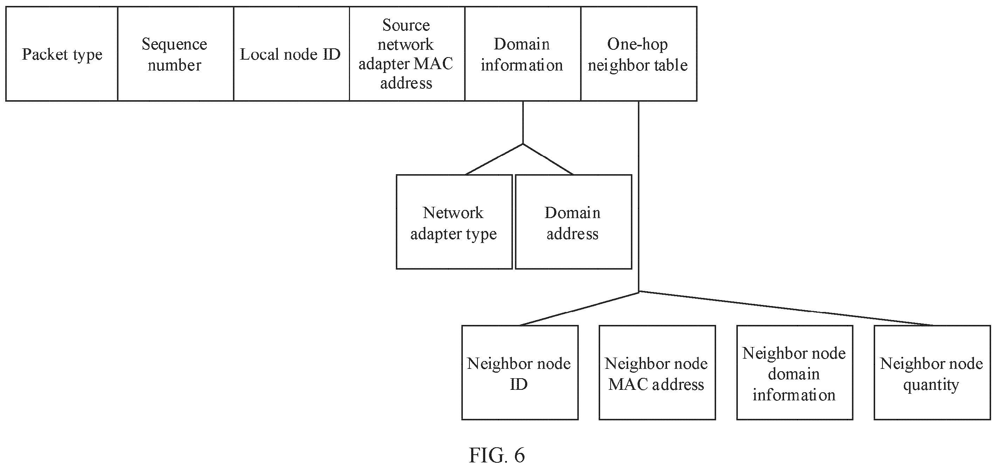

FIG. 6 is a diagram of a packet format of a local heartbeat packet. As shown in FIG. 5, the local heartbeat packet includes information such as a packet type, a sequence number, a local node ID, a source network adapter MAC address, domain information, and a one-hop neighbor table.

The packet type indicates a type of the heartbeat packet. For example, 0x0 may be used to represent a local heartbeat packet, 0x1 may be used to represent a non-forwarded domain information heartbeat packet, and 0x2 may be used to represent a forwarded domain information heartbeat packet.

The sequence number is a sequence number of the heartbeat packet. When the heartbeat packet is sent, a sent heartbeat packet sequence recorded by a node sending the heartbeat packet is increased by 1. To be specific, whether the node sending the heartbeat packet sends the heartbeat packet for the first time may be determined by using the sequence number.

The node ID is an ID of the node sending the heartbeat packet. It may be understood that, for different nodes, node IDs are different.

The source network adapter MAC address is a MAC address of a network adapter that sends the heartbeat packet.

Domain information: The domain information includes a network adapter type and a domain address. The network adapter type is a type of the network adapter that sends the heartbeat packet, for example, an AP network adapter, a STAnetwork adapter, a master network adapter, and a slave network adapter. The domain address indicates a network domain to which the network adapter that sends the heartbeat packet belongs. The communication system shown in FIG. 1 is used as an example. It is assumed that a network adapter type of the electronic device 101 is an AP network adapter, and a network adapter type of the electronic device 102 is a STA network adapter. If the electronic device 102 is connected to the AP network adapter of the electronic device 101 through the STAnetwork adapter, domain addresses of the electronic device 101 and the electronic device 102 are the same, and the domain addresses of the electronic device 101 and the electronic device 102 may be a domain address #1. Similarly, it is assumed that a network adapter type of the electronic device 104 is an AP network adapter, a network adapter type of the electronic device 103 is a STAnetwork adapter, and domain addresses of the electronic device 103 and the electronic device 104 are the same. The domain addresses of the electronic device 103 and the electronic device 104 may be a domain address #2, and the domain address #1 and the domain address #2 are different. The domain address is not limited in embodiments of this application. For example, in embodiments of this application, an electronic device may reuse a domain address of a color (color) domain, or may use a new field to indicate a domain address.

The one-hop neighbor table indicates a quantity of one-hop neighbor nodes, a one-hop neighbor node ID, a one-hop neighbor node MAC address, and one-hop neighbor node domain information.

It should be understood that, for descriptions of the one-hop neighbor table, refer to the foregoing description. For brevity, details are not described herein again.

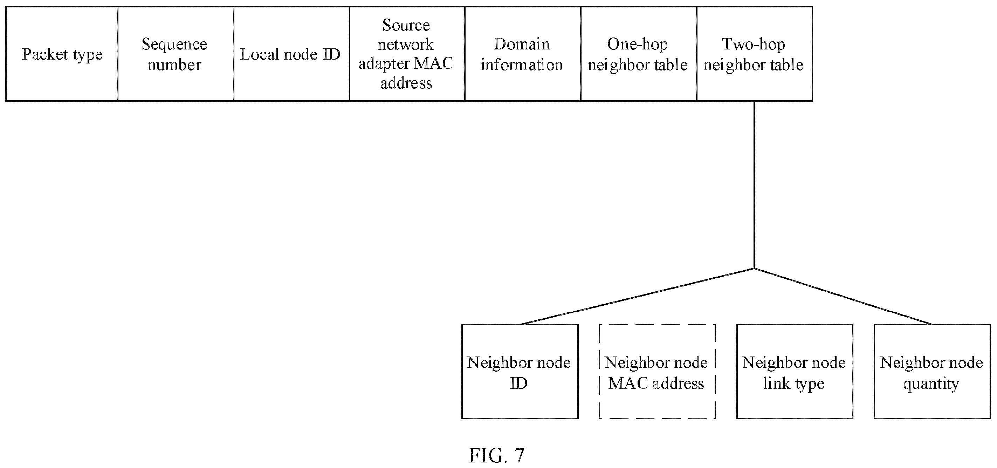

FIG. 7 shows a packet format of a domain information heartbeat packet. As shown in FIG. 6, the domain information heartbeat packet includes a packet type, a sequence number, a local node ID, a source network adapter MAC address, domain information, a one-hop neighbor table, and a two-hop neighbor table.

It should be understood that, for descriptions of the packet type, the sequence number, the local node ID, the source network adapter MAC address, the domain information, and the one-hop neighbor table, refer to the descriptions of the local heartbeat packet. For brevity, details are not described herein again.

The two-hop neighbor table indicates a neighbor node ID, a neighbor node link type, and a neighbor node quantity. The neighbor node ID includes a one-hop neighbor node ID and a two-hop neighbor node ID, the neighbor node link type includes a type of a link between a local node and a one-hop neighbor node and a type of a link between a one-hop neighbor node and a two-hop neighbor node, and the neighbor node quantity includes a sum of quantities of one-hop neighbor nodes and two-hop neighbor nodes.

In some embodiments, the two-hop neighbor table further indicates a neighbor node MAC address, and the neighbor node MAC address includes a one-hop neighbor node MAC address and a two-hop neighbor node MAC address.

The following describes in detail the network topology method provided in embodiments of this application with reference to the communication system shown in FIG. 1. In the following descriptions, it is assumed that one Wi-Fi network adapter is configured for each electronic device in FIG. 1. An example in which a network adapter type of the electronic device 101 is an AP network adapter, a node ID of the electronic device 101 is A, a network adapter type of the electronic device 102 is a STA network adapter, a node ID of the electronic device 102 is B, a network adapter type of the electronic device 103 is a STA network adapter, a node ID of the electronic device 103 is C, a network adapter type of the electronic device 104 is an AP network adapter, a node ID of the electronic device 104 is D, and the electronic device 101 is a central control node is used for description.

When the electronic device in FIG. 1 is powered on and started for the first time, network topology structure information stored in each electronic device may be initialized. The network topology structure information includes a one-hop neighbor table, a two-hop neighbor table, and a global network topology information table.
(1) The one-hop neighbor table of each electronic device is empty.
(2) The two-hop neighbor table of each electronic device includes only a node ID corresponding to the electronic device.
(3) A global network topology information table of the central control node includes only a node ID corresponding to the central control node.

It should be noted that a setting of a network adapter of the foregoing electronic device should not be understood as a limitation on embodiments of this application. For example, the electronic device 101 may further include a master network adapter, and the electronic device 102 may further include a slave network adapter. In this case, the electronic device 102 may establish a Bluetooth connection to the electronic device 101 by using the slave network adapter.

### Case 1:

First, the electronic device 101 and the electronic device 102 are used as an example for description. As shown in FIG. 1, a connection has been established between the electronic device 101 and the electronic device 102, that is, a MAC address of a STA network adapter of the electronic device 102 has been associated with a STAlist of an AP network adapter of the electronic device 101, and the electronic device 101 and the electronic device 102 are in an initialized state. That an electronic device is in an initialization phase may be understood as that a one-hop neighbor table, a two-hop neighbor table, and a global network topology information table of the electronic device do not include information about another electronic device.

It may be understood that, when a network topology is not established, a one-hop neighbor table and a two-hop neighbor table in the electronic device 101 do not include information about the electronic device 102. When the electronic device 101 receives a heartbeat packet #1 of the electronic device 102, the electronic device 101 may determine to process the heartbeat packet #1 when the following conditions are met: (1) The electronic device 101 determines, based on information included in the heartbeat packet #1, that the heartbeat packet #1 is a heartbeat packet sent by the electronic device 102 for the first time. (2) A network adapter type of the electronic device 101 is an AP network adapter, a network adapter type indicated by the heartbeat packet #1 is a STA network adapter, and a source network adapter MAC address in the heartbeat packet #1 has been associated with a STA list of the AP network adapter of the electronic device 101.

If a network adapter of the electronic device 102 is a non-domain head network adapter, the heartbeat packet #1 sent by the electronic device 102 is a local heartbeat packet. Because a network adapter of the electronic device 101 is a domain head network adapter, and the electronic device 101 includes the one-hop neighbor table and the two-hop neighbor table, when receiving the heartbeat packet #1, the electronic device 101 may update the one-hop neighbor table and the two-hop neighbor table based on the heartbeat packet #1.

In some examples, when updating the one-hop neighbor table based on the heartbeat packet #1, the electronic device 101 may insert one or more of the following into the one-hop neighbor table: the source network adapter MAC address in the heartbeat packet #1, a node ID (that is, a node ID of the electronic device 102) in the heartbeat packet #1, and the network adapter type in the heartbeat packet #1.

In some examples, in addition to inserting one or more of the source network adapter MAC address, the network adapter type, and the node ID in the heartbeat packet #1 into the one-hop neighbor table, the electronic device 101 may further insert timeout time into the one-hop neighbor table. A method for determining the timeout time is not limited in embodiments of this application. For example, the electronic device 101 may set a fixed time value as timeout time of a neighbor node (that is, the electronic device 102). For another example, timeout time #1 is set for the electronic device 102, and the electronic device 101 may determine a sum of current time #1 and the timeout time #1 as timeout time of the electronic device 102, where the current time #1 may be time at which the electronic device 101 receives, after being connected to the electronic device 102, the heartbeat packet #1 sent by the electronic device 102.

Because the electronic device 101 is a key node, and may further include the two-hop neighbor table, in addition to updating the one-hop neighbor table, the electronic device 101 may further update the two-hop neighbor table based on the heartbeat packet #1.

Table 3 shows a non-updated two-hop neighbor table of the electronic device 101. Because the electronic device 101 is in an initialized state when receiving the heartbeat packet #1, the two-hop neighbor table of the electronic device 101 includes a node ID of the electronic device 101 but does not include a node ID of the electronic device 102.

**Table 3: Non-updated two-hop neighbor table of the electronic device 101**

| | A |
|---|---|
| A | 0 |

After receiving the heartbeat packet #1 sent by the electronic device 102, the electronic device 101 may insert the node ID in the heartbeat packet #1 into the two-hop neighbor table, and insert an element into corresponding positions of the electronic device 101 and the electronic device 102 in the two-hop neighbor table, to indicate a type of a link between the electronic device 101 and the electronic device 102. Table 4 shows an updated two-hop neighbor table of the electronic device 101. It can be learned from Table 4 that, in the two-hop neighbor table, a type of a link between electronic devices may be indicated by using two bits. 01 may indicate that the type of the link between the electronic device 101 and the electronic device 102 is an AP-STA link.

**Table 4: Updated two-hop neighbor table of the electronic device 101**

| | A | B |
|---|---|---|
| A | 0 | 01 |
| B | 01 | 0 |

Because the electronic device 101 is further the central control node, and further includes the global network topology information table, in addition to updating the one-hop neighbor table and the two-hop neighbor table based on the heartbeat packet #1, the electronic device 101 may further update the global network topology information table based on the heartbeat packet #1.

Table 5 shows a non-updated global network topology information table of the electronic device 101. Because the electronic device 101 is in an initialized state when receiving the heartbeat packet #1, the global network topology information table of the electronic device 101 includes the node ID of the electronic device 101.

**Table 5: Non-updated global network topology information table of the electronic device 101**

| | A |
|---|---|
| A | 0 |

After receiving the heartbeat packet #1 sent by the electronic device 102, the electronic device 101 may insert the node ID in the heartbeat packet #1 into the global network topology information table, and insert an element into corresponding positions of the electronic device 101 and the electronic device 102 in the global network topology information table, to indicate a type of a link between the electronic device 101 and the electronic device 102. Table 6 shows an updated global network topology information table of the electronic device 101. It can be learned from Table 6 that, in the global network topology information table, a type of a link between electronic devices may be indicated by using two bits. 01 may indicate that the type of the link between the electronic device 101 and the electronic device 102 is an AP-STA link.

**Table 6: Updated global network topology information table of the electronic device 101**

| | A | B |
|---|---|---|
| A | 0 | 01 |
| B | 01 | 0 |

Through processing performed on the heartbeat packet #1 by the electronic device 101, the electronic device 101 adds information about the electronic device 102 to the one-hop neighbor table, the two-hop neighbor table, and the network topology information table, to establish a network topology diagram.

In some examples, when receiving again a heartbeat packet sent by the electronic device 102, the electronic device 101 may update the one-hop neighbor table based on the heartbeat packet received this time, for example, update the timeout time of the electronic device 102.

Because the electronic device 101 is further a key node, if a one-hop neighbor table in the heartbeat packet sent by the electronic device 102 this time includes node information of a neighbor node, the electronic device 101 may further update the two-hop neighbor table based on the heartbeat packet received this time, that is, use a one-hop neighbor of the electronic device 102 as a two-hop neighbor of the electronic device 101.

Because the electronic device is further the central control node, the electronic device 101 may further update the global network topology table based on the heartbeat packet received this time.

It may be understood that the electronic device 104 may also receive a heartbeat packet sent by the electronic device 103. Because the electronic device 104 is a key node, the electronic device 104 may update a one-hop neighbor table and a two-hop neighbor table based on the received heartbeat packet. Because the electronic device 104 is not a central control node, the electronic device 104 does not have a global network topology table.

### Case 2:

The foregoing describes a processing procedure performed after an electronic device including a domain head network adapter receives a local heartbeat packet sent by a connected electronic device including a non-domain head network adapter. The following describes a processing procedure performed after an electronic device including a non-domain head network adapter receives a local heartbeat packet sent by a connected electronic device including a non-domain head network adapter.

The communication system 100 shown in FIG. 1 is used as an example. The electronic device 102 receives a heartbeat packet #2 sent by the electronic device 103, and the electronic device 102 may determine to process the heartbeat packet #2 when the following conditions are met: (1) The electronic device 102 determines, based on information included in the heartbeat packet #2, that the heartbeat packet #2 is a heartbeat packet sent by the electronic device 103 for the first time. (2) A network adapter type of the electronic device 102 is a STA network adapter, and a network adapter type of the electronic device 103 is a STA network adapter.

If a network adapter of the electronic device 103 is a non-domain head network adapter, the heartbeat packet #2 sent by the electronic device 103 is a local heartbeat packet. Because a network adapter of the electronic device 102 is a non-domain head network adapter, and the electronic device 102 includes a one-hop neighbor table, when receiving the heartbeat packet #2, the electronic device 102 may update the one-hop neighbor table based on the heartbeat packet #2.

In some examples, when updating the one-hop neighbor table based on the heartbeat packet #2, the electronic device 102 may insert one or more of the following into the one-hop neighbor table: a source network adapter MAC address in the heartbeat packet #2, a node ID (that is, a node ID of the electronic device 103) in the heartbeat packet #2, and a network adapter type in the heartbeat packet #2.

In some examples, in addition to inserting one or more of the source network adapter MAC address, the network adapter type, and the node ID in the heartbeat packet #2 into the one-hop neighbor table, the electronic device 102 may further insert timeout time into the one-hop neighbor table. For descriptions of the timeout time, refer to the foregoing description. For brevity, details are not described herein again.

In addition, because a STA network adapter of the electronic device 101 is connected to an AP network adapter of the electronic device 102, and a STA network adapter of the electronic device 103 is connected to an AP network adapter of the electronic device 104, domain addresses of the electronic device 102 and the electronic device 103 are different. When the electronic device 102 is in an initialized state, because the network adapter of the electronic device 102 is a non-domain head network adapter, a node role of the electronic device 102 is a non-key node. After receiving the heartbeat packet #2, the electronic device 102 may determine, based on the information in the heartbeat packet #2, that a connection to the electronic device 103 is a cross-domain connection, and the electronic device 102 may change the node role to a key node.

### Case 3:

In Case 1, when the electronic device 101 receives the heartbeat packet #1 sent by the electronic device 102, because the one-hop neighbor table is empty after the electronic device 102 is powered on and started for the first time, the electronic device 101 fails to add node information of a two-hop neighbor of the electronic device 101 to the two-hop neighbor table. Before the electronic device 102 sends the heartbeat packet to the electronic device 101, if node information of a one-hop neighbor exists in the one-hop neighbor table, for example, the electronic device 102 receives and processes the heartbeat packet #2 sent by the electronic device 103, when the electronic device 102 sends the heartbeat packet to the electronic device 101, a one-hop neighbor table in the heartbeat packet includes the node information of the one-hop neighbor of the electronic device 102. Therefore, the electronic device 101 may use the one-hop neighbor of the electronic device 102 as a two-hop neighbor of the electronic device 101.

The communication system 100 shown in FIG. 1 is used as an example. Assuming that the electronic device 102 has received and processed the heartbeat packet #2 sent by the electronic device 103, the electronic device 102 may update the one-hop neighbor table. For specific descriptions, refer to the descriptions for Case 2.

When the electronic device 101 receives a heartbeat packet #3 sent by the electronic device 102, the electronic device 101 may determine to process the heartbeat packet #3 when the following conditions are met: (1) The electronic device 101 determines, based on information included in the heartbeat packet #3, that the heartbeat packet #1 is a heartbeat packet sent by the electronic device 102 for the first time. (2) A network adapter type of the electronic device 101 is an AP network adapter, a network adapter type indicated by the heartbeat packet #3 is a STA network adapter, and a source network adapter MAC address in the heartbeat packet #1 has been associated with a STA list of the AP network adapter of the electronic device 101.

If a network adapter of the electronic device 102 is a non-domain head network adapter, the heartbeat packet #3 sent by the electronic device 102 is a local heartbeat packet. Because a network adapter of the electronic device 101 is a domain head network adapter, and the electronic device 101 includes the one-hop neighbor table and the two-hop neighbor table, when receiving the heartbeat packet #3, the electronic device 101 may update the one-hop neighbor table and the two-hop neighbor table based on the heartbeat packet #3.

It should be understood that, for descriptions of updating the one-hop neighbor table by the electronic device 101 based on the heartbeat packet #3, refer to the descriptions of Case 1. For brevity, details are not described herein again.

Because the electronic device 101 is a key node, and further includes the two-hop neighbor table, in addition to updating the one-hop neighbor table, the electronic device 101 may further update the two-hop neighbor table based on the heartbeat packet #3.

Table 7 shows a non-updated two-hop neighbor table of the electronic device 101. Because the electronic device 101 is in an initialized state when receiving the heartbeat packet #3, the two-hop neighbor table of the electronic device 101 includes a node ID of the electronic device 101 but does not include a node ID of the electronic device 102.

**Table 7: Non-updated two-hop neighbor table of the electronic device 101**

| | A |
|---|---|
| A | 0 |

After receiving the heartbeat packet #3 sent by the electronic device 102, the electronic device 101 may insert the node ID in the heartbeat packet #3 into the two-hop neighbor table, and insert an element into corresponding positions of the electronic device 101 and the electronic device 102 in the two-hop neighbor table, to indicate a type of a link between the electronic device 101 and the electronic device 102.

**In** addition, because the one-hop neighbor table in the heartbeat packet #3 includes node information of the electronic device 103, and the two-hop neighbor table of the electronic device 101 does not include the node information of the electronic device 103, the electronic device 101 may further insert the node information of the electronic device 103 into the two-hop neighbor table. Table 8 shows an updated two-hop neighbor table of the electronic device 101. It can be learned from Table 4 that a one-hop neighbor of the electronic device 101 is the electronic device 102, and a two-hop neighbor of the electronic device 101 is the electronic device 103. **In** the two-hop neighbor table, a type of a link between electronic devices may be indicated by using two bits. For example, 01 may indicate that a type of a link between the electronic device 101 and the electronic device 102 is an AP-STA link, and 10 indicates that a type of a link between the electronic device 102 and the electronic device 103 is a STA-STA link.

**Table 8: Updated two-hop neighbor table of the electronic device 101**

| | A | B | C |
|---|---|---|---|
| A | 0 | 01 | 0 |
| B | 01 | 0 | 10 |
| C | 0 | 10 | 0 |

Because the electronic device 101 may further be the central control node, and further includes the global network topology information table, in addition to updating the one-hop neighbor table and the two-hop neighbor table based on the heartbeat packet #3, the electronic device 101 may further update the global network topology information table based on the heartbeat packet #3.

It should be understood that, for descriptions of updating the global network topology information table by the electronic device 101 based on the heartbeat packet #3, refer to the descriptions of Case 1. For brevity, details are not described herein again.

### Case 4:

Case 3 describes a processing procedure performed after an electronic device including a domain head network adapter receives, for the first time, a local heartbeat packet sent by a connected electronic device including a non-domain head network adapter. The following describes a processing procedure performed after an electronic device including a non-domain head network adapter receives, for a non-first time, a local heartbeat packet sent by a connected electronic device including a non-domain head network adapter.

The communication system shown in FIG. 1 is used as an example. The electronic device 102 receives a local heartbeat packet of the electronic device 103 for a non-first time. A one-hop neighbor table of the electronic device 102 already includes node information of the electronic device 103, for example, a network adapter type of the electronic device 103, a node ID of the electronic device 103, a network adapter MAC address of the electronic device 103, and timeout time of the electronic device 103, where the network adapter type of the electronic device 103, the node ID of the electronic device 103, and the network adapter MAC address of the electronic device 103 remain unchanged. Therefore, in some embodiments, the electronic device 102 may update the timeout time of the electronic device 103 in the one-hop neighbor table.

It may be understood that, because the electronic device 102 receives the local heartbeat packet of the electronic device 103 for the non-first time, before the electronic device 102 receives the local heartbeat packet this time, the electronic device 102 has changed a node role to a key node. For specific descriptions, refer to the foregoing description.

### Case 5:

In the foregoing four examples, an electronic device receives a local heartbeat packet. The following describes a processing procedure in which a non-domain head network adapter receives a domain information heartbeat packet.

The communication system shown in FIG. 1 is used as an example. In this example, the electronic device 102 is a non-key node, the electronic device 102 receives a heartbeat packet #4 sent by the electronic device 101, and a network adapter of the electronic device 101 is a domain head network adapter. In this case, the heartbeat packet #4 is a domain information heartbeat packet. The electronic device 102 may determine, based on a packet format of the heartbeat packet #4, that the heartbeat packet #4 is a domain information heartbeat packet, and the electronic device 102 may process the heartbeat packet #4 when the following conditions are met: (1) The electronic device 102 determines, based on information included in the heartbeat packet #4, that the heartbeat packet #4 is a heartbeat packet sent by the electronic device 101 for the first time. (2) A network adapter type of the electronic device 101 indicated by the heartbeat packet #4 is an AP network adapter, and a source network adapter MAC address in the heartbeat packet #4 is the same as a MAC address of an AP network adapter connected to a STA network adapter of the electronic device 102.

Because the electronic device 102 receives, for the first time, the domain information heartbeat packet sent by the electronic device 101, and the one-hop neighbor table does not include node information of the electronic device 101, the electronic device 102 may update the one-hop neighbor table based on the heartbeat packet #4.

In some examples, when updating the one-hop neighbor table based on the heartbeat packet #4, the electronic device 102 may insert one or more of the following into the one-hop neighbor table: a source network adapter MAC address in the heartbeat packet #4, a node ID (that is, a node ID of the electronic device 103) in the heartbeat packet #4, and a network adapter type in the heartbeat packet #4.

In some examples, in addition to inserting one or more of the source network adapter MAC address, the network adapter type, and the node ID in the heartbeat packet #4 into the one-hop neighbor table, the electronic device 102 may further insert timeout time into the one-hop neighbor table.

In addition, because the network adapter of the electronic device 102 is a non-domain head network adapter, and the electronic device 102 is not a central control node or a key node, the electronic device 102 does not have a two-hop neighbor table or a global network topology information table, and the processing procedure ends.

Similarly, the electronic device 103 may receive a heartbeat packet of the electronic device 104, and update a one-hop neighbor table based on the received heartbeat packet. For specific descriptions, refer to the foregoing description.

### Case 6:

In the foregoing example, an example in which the electronic device 102 is a non-key node and receives the domain information heartbeat packet of the electronic device 101 for the first time is used. The following uses an example in which the electronic device 102 has changed to a key node and receives a domain information heartbeat packet of the electronic device 101 for a non-first time for description.

It should be understood that the electronic device 102 may change to the key node after receiving and processing a local heartbeat packet of the electronic device 103.

The electronic device 102 receives a heartbeat packet #5 sent by the electronic device 101, and may determine, based on a packet format and a sequence number of the heartbeat packet #5, that the domain information heartbeat packet is received for a non-first time. A one-hop neighbor table of the electronic device 102 already includes node information of the electronic device 101, for example, a network adapter type of the electronic device 101, a node ID of the electronic device 101, a network adapter MAC address of the electronic device 101, and timeout time of the electronic device 101, where the network adapter type of the electronic device 101, the node ID of the electronic device 101, and the network adapter MAC address of the electronic device 101 remain unchanged. Therefore, in some embodiments, the electronic device 102 may update the timeout time of the electronic device 101 in the one-hop neighbor table based on the heartbeat packet #5.

In addition, in some embodiments, because the electronic device 102 has changed to the key node, the electronic device 102 may change the packet format of the heartbeat packet #5, so that a type of the changed heartbeat packet #4 is a forwarded domain information heartbeat packet. For example, the electronic device 102 may change the packet type of the heartbeat packet #5 from 0x1 to 0x2. After changing the packet type of the heartbeat packet #5, the electronic device 102 may forward the changed heartbeat packet #5 through flooding.

### Case 7:

Similarly, the electronic device 103 may also change to a key node after receiving and processing a local heartbeat packet of the electronic device 102, and the electronic device 103 may also forward a heartbeat packet of the electronic device 104 through flooding. When receiving a heartbeat packet #6 of the electronic device 104 forwarded by the electronic device 103 through flooding, the electronic device 102 may perform the following processing:
After receiving the heartbeat packet #6, the electronic device 102 may determine, based on the heartbeat packet #6, that the heartbeat packet #6 is a forwarded domain information heartbeat packet. If the electronic device 102 has changed to a key node, the electronic device 102 may continue to forward the heartbeat packet #6 through flooding.

### Case 8:

The following describes a processing procedure performed after the electronic device 101 receives a heartbeat packet of the electronic device 104 forwarded by the electronic device 102 through flooding.

The electronic device 101 receives a heartbeat packet #7 of the electronic device 104 forwarded by the electronic device 102 through flooding, and may perform the following processing after determining, based on the heartbeat packet #7, that the heartbeat packet #7 is a forwarded domain information heartbeat packet:
The heartbeat packet #7 is the domain information heartbeat packet, and includes a two-hop neighbor table of the electronic device 104. The electronic device 101 is a central control node, and includes a global network topology information table. The electronic device 101 may update a two-hop neighbor table in the heartbeat packet #6 into the global network topology information table.

For example, Table 9 shows a non-updated global network topology information table of the electronic device 101. It can be learned from the global network topology information table shown in Table 9 that a type of a link between the electronic device 101 and the electronic device 102 is an AP-STA link, and a type of a link between the electronic device 102 and the electronic device 103 is a STA-STA link. Table 10 shows the two-hop neighbor table in the heartbeat packet #7. It can be learned from the two-hop neighbor table shown in Table 10 that a type of a link between the electronic device 103 and the electronic device 104 is an AP-STA link, and a type of a link between the electronic device 102 and the electronic device 103 is a STA-STAlink. After receiving the heartbeat packet #7, the electronic device 101 may update Table 7 according to Table 8 to obtain Table 11. Table 11 shows an updated global network topology information table of the electronic device 101. It can be learned from the global network topology information table shown in Table 11 that a one-hop neighbor of the electronic device 101 is the electronic device 102, a link type is an AP-STA link, and a two-hop neighbor is the electronic device 103. One-hop neighbors of the electronic device 102 are the electronic device 101 and the electronic device 103, and a two-hop neighbor is the electronic device 104. One-hop neighbors of the electronic device 103 are the electronic device 102 and the electronic device 104, and a two-hop neighbor is the electronic device 101. A one-hop neighbor of the electronic device 104 is the electronic device 103, and a two-hop neighbor is the electronic device 102.

**Table 9: Non-updated global network topology information table of the electronic device 101**

| | A | B | C |
|---|---|---|---|
| A | 0 | 01 | 0 |
| B | 01 | 0 | 10 |
| C | 0 | 10 | 0 |

**Table 10: Two-hop neighbor table in the heartbeat packet #6**

| | D | C | B |
|---|---|---|---|
| D | 0 | 01 | 0 |
| C | 01 | 0 | 10 |
| B | 0 | 10 | 0 |

**Table 11: Non-updated global network topology information table of the electronic device 101**

| | A | B | C | D |
|---|---|---|---|---|
| A | 0 | 01 | 0 | 0 |
| B | 01 | 0 | 10 | 0 |
| C | 0 | 10 | 0 | 01 |
| D | 0 | 0 | 01 | 0 |

In embodiments of this application, the electronic device 101 is used as a central control node, a finally constructed global network topology information table can truly reflect a type of a link between electronic devices, and a P2P link, that is, a STA-STAlink, can be discovered. In addition, the electronic device in embodiments of this application forwards a heartbeat packet through flooding only when it is determined that a node is a key node, so that overheads of air interface resources are reduced.

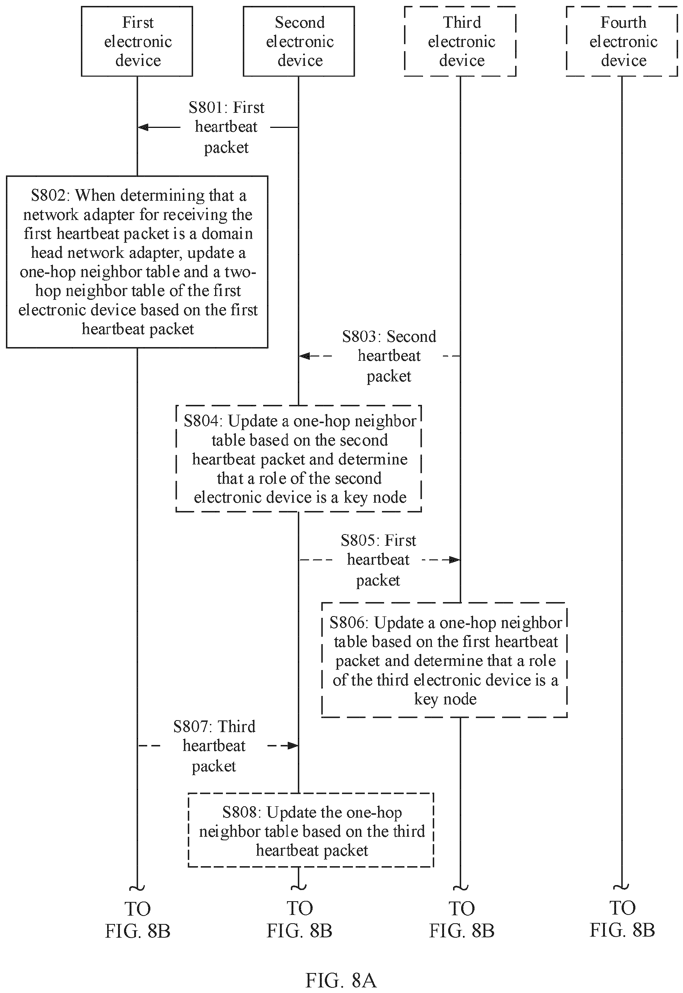

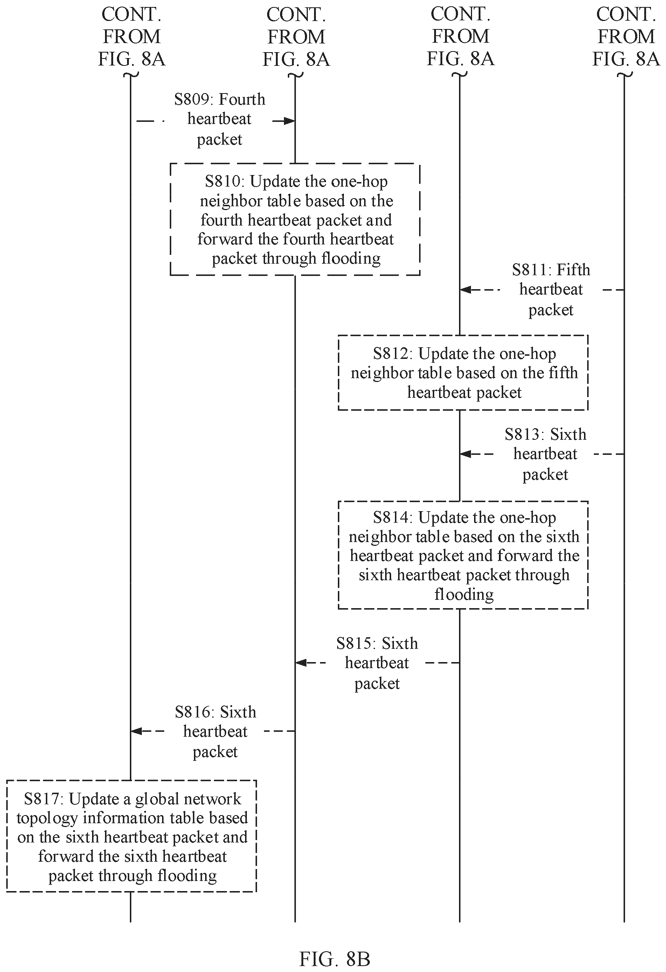

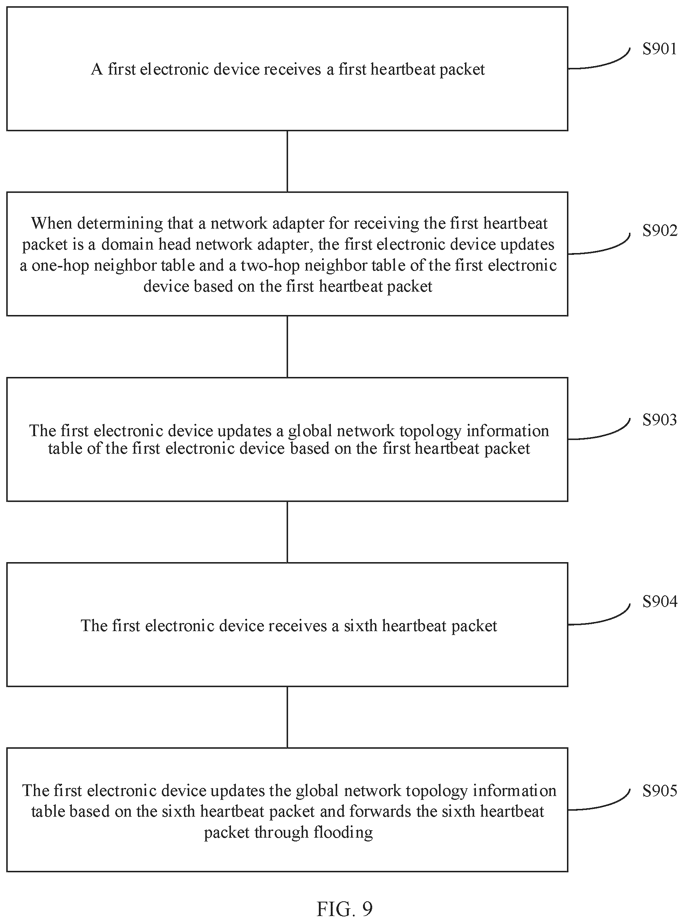

The foregoing mainly describes the network topology method provided in embodiments of this application with reference to the communication system 100 shown in FIG. 1. The following describes a system provided in embodiments of this application with reference to FIG. 8A and FIG. 8B, and describes a network topology method provided in embodiments of this application with reference to FIG. 9.

FIG. 8A and FIG. 8B are an interaction diagram of a system according to an embodiment of this application. The system includes a first electronic device and a second electronic device. As shown in FIG. 8A and FIG. 8B, the electronic devices in the system may perform the following steps.

S801: The second electronic device sends a first heartbeat packet to the first electronic device.

Correspondingly, the first electronic device receives the first heartbeat packet sent by the second electronic device, where the first heartbeat packet may be a heartbeat packet sent by the second electronic device for the first time.

For example, as described in Case 1, the electronic device 102 may send the heartbeat packet #1 to the electronic device 101, and the electronic device 101 may receive the heartbeat packet #1.

S802: When determining that a network adapter for receiving the first heartbeat packet is a domain head network adapter, the first electronic device updates a one-hop neighbor table and a two-hop neighbor table of the first electronic device based on the first heartbeat packet.

For example, as described in Case 1, after the electronic device 101 receives the heartbeat packet #1, because a network adapter used by the electronic device 101 to receive the heartbeat packet #1 is a domain head network adapter, the electronic device 101 may update the one-hop neighbor table and the two-hop neighbor table.

In some embodiments, when the first electronic device determines that the first electronic device is a central control node, the first electronic device may further update a global network topology table based on the first heartbeat packet.

Alternatively, when determining that a network adapter for receiving the first heartbeat packet is a non-domain head network adapter, the first electronic device updates a one-hop neighbor table of the first electronic device based on the first heartbeat packet.

In this embodiment of this application, after receiving the heartbeat packet, the electronic device may update network topology information based on a type of the network adapter for receiving the heartbeat packet, so that the electronic device can accurately construct a network topology diagram, and the constructed network topology diagram can truly reflect a type of a link between electronic devices.

Optionally, in some embodiments, the system further includes a third electronic device, the second electronic device is connected to the third electronic device, a network adapter used by the third electronic device to send and receive a heartbeat packet is a non-domain head network adapter, a network adapter used by the second electronic device to receive and send a heartbeat packet is a non-domain head network adapter, and domain addresses of the second electronic device and the third electronic device are different. The electronic devices in the system may perform the following steps.

S803: The third electronic device sends a second heartbeat packet to the second electronic device.

Correspondingly, the second electronic device receives the second heartbeat packet sent by the third electronic device.

For example, as described in Case 2, the electronic device 102 may receive the heartbeat packet #2 sent by the electronic device 103, a network adapter used by the electronic device 102 to receive the heartbeat packet #2 is a non-domain head network adapter, and a network adapter used by the electronic device 103 to send the heartbeat packet #2 is a non-domain head network adapter.

S804: The second electronic device updates a one-hop neighbor table based on the second heartbeat packet and determines that a role of the second electronic device is a key node.

For example, as described in Case 2, after receiving the heartbeat packet #2 sent by the electronic device 103, the electronic device 102 may update a one-hop neighbor table based on the heartbeat packet #2. Because domain addresses of the electronic device 102 and the electronic device 103 are different, the electronic device 102 is in a cross-domain connection, and the electronic device 102 may determine that a role of the electronic device 102 is a key node.

S805: The second electronic device sends the first heartbeat packet to the third electronic device.

Correspondingly, the third electronic device receives the first heartbeat packet sent by the second electronic device.

S806: The third electronic device updates a one-hop neighbor table based on the first heartbeat packet and determines that a role of the third electronic device is a key node.

It should be understood that descriptions of S805 and S806 are similar to descriptions of S803 and S804. For brevity, details are not described herein again.

Optionally, in some embodiments, a network adapter used by the first electronic device to send and receive a heartbeat packet is a domain head network adapter, and the electronic devices in the system may perform the following steps.

S807: The first electronic device sends a third heartbeat packet to the second electronic device.

For example, as described in Case 5, the electronic device 101 may send a heartbeat packet to the electronic device 102.

S808: The second electronic device updates the one-hop neighbor table based on the third heartbeat packet.

In some embodiments, if a network adapter used by the second electronic device to receive the third heartbeat packet is a non-domain head network adapter, the second electronic device updates the one-hop neighbor table based on the second heartbeat packet.

For example, as described in Case 5, after the electronic device 102 receives the heartbeat packet #4, because a network adapter of the electronic device 102 is a non-domain head network adapter, the electronic device 102 may update the one-hop neighbor table based on the heartbeat packet #4.

In some embodiments, if a network adapter used by the second electronic device for the third heartbeat packet is a domain head network adapter, the second electronic device updates the one-hop neighbor table and a two-hop neighbor table based on the second heartbeat packet.

For example, as described in Case 1, if the electronic device 104 receives a heartbeat packet sent by the electronic device 103, the electronic device 104 may update the one-hop neighbor table and the two-hop neighbor table.

It should be noted that an actual sequence of performing S801 and S807 is not limited.

Optionally, in some embodiments, the network adapter used by the first electronic device to send and receive a heartbeat packet is a domain head network adapter, the role of the second electronic device is a key node, and the electronic devices in the system are configured to perform the following steps.

S809: The first electronic device sends a fourth heartbeat packet to the second electronic device.

Correspondingly, the second electronic device receives the fourth heartbeat packet sent by the first electronic device.

The first electronic device may send the fourth heartbeat packet after sending the third heartbeat packet.

S810: The second electronic device updates the one-hop neighbor table based on the fourth heartbeat packet and forwards the fourth heartbeat packet through flooding.

For example, as described in Case 6, the electronic device 102 has changed to a key node, and the electronic device 102 receives the heartbeat packet #5 sent by the electronic device 101. Because a network adapter used by the electronic device 101 to send the heartbeat packet #5 is a domain head network adapter, and the heartbeat packet #5 is not a heartbeat packet sent by the electronic device 101 for the first time, the electronic device 102 may update the one-hop neighbor table based on the heartbeat packet #5 and forward the heartbeat packet #5 through flooding.

In embodiments of this application, a role of an electronic device is defined. When the role of the electronic device is a key node, and a received heartbeat packet is a domain information heartbeat packet, the electronic device may forward the heartbeat packet through flooding, rather than all heartbeat packets are forwarded through flooding and all electronic devices forward a heartbeat packet through flooding, so that air interface resources are saved.

Optionally, in some embodiments, the system further includes a fourth electronic device, the fourth electronic device is connected to the third electronic device, a network adapter used by the fourth electronic device to send and receive a heartbeat packet is a domain head network adapter, and the electronic devices in the system may perform the following steps.

S811: The fourth electronic device sends a fifth heartbeat packet to the third electronic device.

Correspondingly, the third electronic device receives the fifth heartbeat packet sent by the fourth electronic device, where the fifth heartbeat packet may be a heartbeat packet sent by the fourth electronic device for the first time.

S812: The third electronic device updates the one-hop neighbor table based on the fifth heartbeat packet.

For example, as described in Case 5, the electronic device 103 receives a heartbeat packet sent by the electronic device 104, and the electronic device 103 may update a one-hop neighbor table.

S813: The fourth electronic device sends a sixth heartbeat packet to the third electronic device.

Correspondingly, the third electronic device receives the sixth heartbeat packet sent by the fourth electronic device.

The fourth electronic device may send the sixth heartbeat packet after sending the fifth heartbeat packet.

S814: The third electronic device updates the one-hop neighbor table based on the sixth heartbeat packet and forwards the sixth heartbeat packet through flooding.

For example, as described in Case 6, after the electronic device 102 receives the heartbeat packet #5 sent by the electronic device 101, as the electronic device 102 is a key node, the electronic device 102 may update the one-hop neighbor table based on the heartbeat packet #5 and forward the heartbeat packet #5 through flooding.

Optionally, in some embodiments, the first electronic device is the central control node, and the electronic devices in the system may perform the following steps.

S815: The second electronic device receives the sixth heartbeat packet forwarded by the third electronic device through flooding.

S816: The second electronic device forwards the sixth heartbeat packet through flooding.

Correspondingly, the first electronic device receives the sixth heartbeat packet forwarded by the second electronic device through flooding.

S817: The first electronic device updates the global network topology information table based on the sixth heartbeat packet and forwards the sixth heartbeat packet through flooding.

For example, as described in Case 8, the electronic device 101 receives the heartbeat packet #7 of the electronic device 104 that is forwarded by the electronic device 102 through flooding, and the electronic device 101 may update the global network topology information table based on the heartbeat packet #7.

In embodiments of this application, a role of an electronic device is defined. When the role of the electronic device is a key node, and a received heartbeat packet is a domain information heartbeat packet, the electronic device may forward the heartbeat packet through flooding, rather than all heartbeat packets are forwarded through flooding and all electronic devices forward a heartbeat packet through flooding, so that air interface resources are saved.

FIG. 9 is a schematic flowchart of a network topology method according to an embodiment of this application. As shown in FIG. 9, the method includes the following steps.

S901: A first electronic device receives a first heartbeat packet.

S902: When determining that a network adapter for receiving the first heartbeat packet is a domain head network adapter, the first electronic device updates a one-hop neighbor table and a two-hop neighbor table of the first electronic device based on the first heartbeat packet.

If the network adapter used by the first electronic device to receive the first heartbeat packet is the domain head network adapter, the first electronic device updates the one-hop neighbor table and the two-hop neighbor table of the first electronic device based on the first heartbeat packet.

In some embodiments, if the network adapter used by the first electronic device to receive the first heartbeat packet is a non-domain head network adapter, the first electronic device updates the one-hop neighbor table of the first electronic device based on the first heartbeat packet.

For example, as described in Case 1, the electronic device 104 receives a heartbeat packet sent by the electronic device 103, the electronic device 104 includes a domain head network adapter, and the electronic device 104 is a key node. Therefore, the electronic device 104 may update a one-hop neighbor table and a two-hop neighbor table based on the heartbeat packet sent by the electronic device 103.

For example, as described in Case 5, the electronic device 102 receives a heartbeat packet sent by the electronic device 101, a network adapter used by the electronic device 102 to receive the heartbeat packet is a non-domain head network adapter, and the electronic device 102 may update a one-hop neighbor table based on the heartbeat packet sent by the electronic device 101.

It may be understood that, that the first electronic device updates the one-hop neighbor table and the two-hop neighbor table includes adding new node information to the one-hop neighbor table and the two-hop neighbor table, and further includes maintaining node information in original network topology information.

Optionally, S902 in which when determining that a network adapter for receiving the first heartbeat packet is a domain head network adapter, the first electronic device updates a one-hop neighbor table and a two-hop neighbor table of the first electronic device based on the first heartbeat packet includes:
The first electronic device determines that the network adapter for receiving the first heartbeat packet is the domain head network adapter and determines that a preset condition is met, and the first electronic device updates the one-hop neighbor table and the two-hop neighbor table of the first electronic device based on the first heartbeat packet.

For example, the preset condition may be that the first electronic device receives the first heartbeat packet for the first time, and further include one of the following: the network adapter used by the first electronic device to receive the first heartbeat packet is an access point AP network adapter, a network adapter for sending the first heartbeat packet is a station STA network adapter, and a source network adapter media access control MAC address in the first heartbeat packet has been associated with a STA list of the AP network adapter of the first electronic device; or
the network adapter used by the first electronic device to receive the first heartbeat packet is a master master network adapter, a network adapter for sending the first heartbeat packet is a slave slave network adapter, and a source network adapter MAC address in the first heartbeat packet has been associated with a slave list of the first electronic device; or
the network adapter used by the first electronic device to receive the first heartbeat packet is a STA network adapter, a network adapter for sending the first heartbeat packet is an AP network adapter, and a source network adapter MAC address in the first heartbeat packet is the same as a MAC address of an AP network adapter associated with the STA network adapter of the first electronic device; or
the network adapter used by the first electronic device to receive the first heartbeat packet is a slave network adapter, a network adapter for sending the first heartbeat packet is a master network adapter, and a source network adapter MAC address in the first heartbeat packet is the same as a MAC address of a master network adapter associated with the slave network adapter of the first electronic device; or
the network adapter used by the first electronic device to receive the first heartbeat packet is a STA network adapter, and a network adapter for sending the first heartbeat packet is a STA network adapter.

In this embodiment of this application, after receiving the heartbeat packet, the electronic device may update network topology information based on a type of the network adapter for receiving the heartbeat packet, so that the electronic device can accurately construct a network topology diagram, and the constructed network topology diagram can truly reflect a type of a link between electronic devices.

Optionally, in some embodiments, when the first electronic device determines that the first electronic device is a central control node, the method further includes the following steps.

S903: The first electronic device updates a global network topology information table of the first electronic device based on the first heartbeat packet.

If the first electronic device is the central control node, the first electronic device may update the one-hop neighbor table, the two-hop neighbor table, and the global network topology information table based on the first heartbeat packet.

For example, as described in Case 1, the electronic device 101 is a central control node, and after receiving a heartbeat sent by the electronic device 102, the electronic device 101 may update a one-hop neighbor table, a two-hop neighbor table, and a global network topology information table.

Optionally, in some embodiments, the network adapter used by the first electronic device to receive the first heartbeat packet is the domain head network adapter, and the method further includes the following steps.

S904: The first electronic device receives a sixth heartbeat packet.

The first electronic device receives the sixth heartbeat packet, where the sixth heartbeat packet is a heartbeat packet forwarded by the second electronic device through flooding.

In this embodiment of this application, when a role of an electronic device is a key node, a domain information heartbeat packet may be forwarded through flooding. In other words, the sixth heartbeat packet is a domain information heartbeat packet. If the first electronic device is the central control node, when receiving the forwarded domain information heartbeat packet, the first electronic device may update the global network topology information table based on the sixth heartbeat packet.

For example, as described in Case 8, the electronic device 101 is a central control node, and after the electronic device 101 receives a heartbeat packet of the electronic device 104 that is forwarded by the electronic device 102 through flooding, the electronic device 101 may update a global network topology information table based on the heartbeat packet.

S905: The first electronic device updates the global network topology information table based on the sixth heartbeat packet and forwards the sixth heartbeat packet through flooding.

In embodiments of this application, a role of an electronic device is defined. When the role of the electronic device is a key node, and a received heartbeat packet is a domain information heartbeat packet, the electronic device may forward the heartbeat packet through flooding, rather than all heartbeat packets are forwarded through flooding and all electronic devices forward a heartbeat packet through flooding, so that air interface resources are saved.

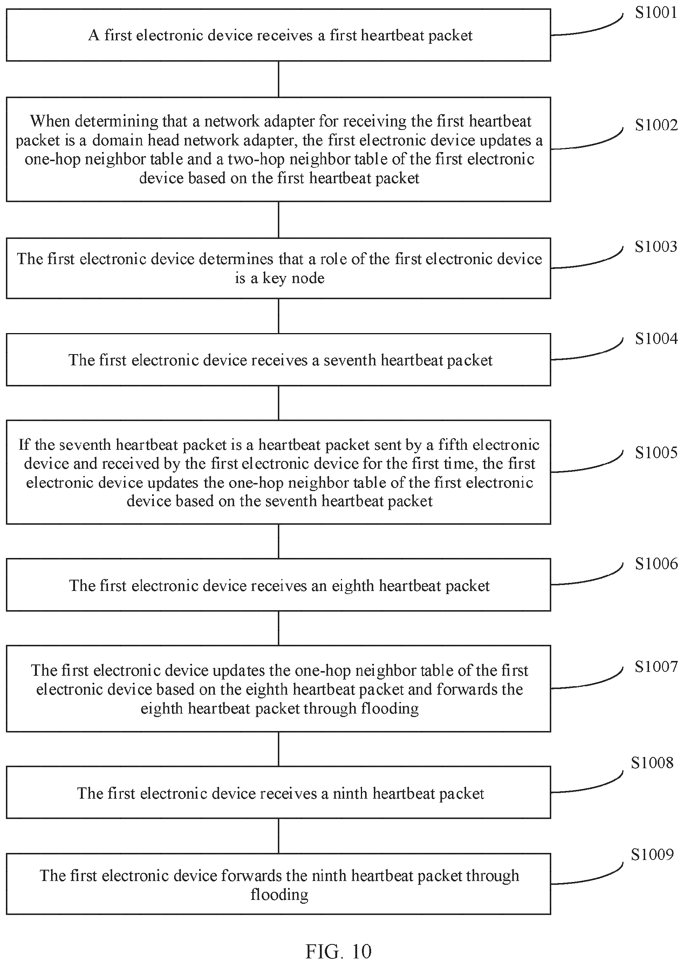

FIG. 10 is a schematic flowchart of another network topology method according to an embodiment of this application. As shown in FIG. 10, the method includes the following steps.

S1001: A first electronic device receives a first heartbeat packet.

S1002: When determining that a network adapter for receiving the first heartbeat packet is a domain head network adapter, the first electronic device updates a one-hop neighbor table and a two-hop neighbor table of the first electronic device based on the first heartbeat packet.

It may be understood that for descriptions of S1001 and S1002, refer to the foregoing descriptions of S901 and S902.

In some embodiments, the network adapter used by the first electronic device to receive the first heartbeat packet is a non-domain head network adapter, the first heartbeat packet is a heartbeat packet sent by a second electronic device by using a non-domain head network adapter, the first electronic device is connected to the second electronic device, domain addresses of the first electronic device and a seventh electronic device are different, and the method further includes the following steps.

S1003: The first electronic device determines that a role of the first electronic device is a key node.

For example, as described in cases 2 and 4, the electronic device 102 and the electronic device 103 may be connected across domains, that is, domain addresses of the electronic device 102 and the electronic device 103 are different. After receiving a heartbeat packet of the electronic device 103, the electronic device 102 may not only update a one-hop neighbor table based on the heartbeat packet, but also determine that the electronic device 102 is a key node, to forward a received domain information heartbeat packet.

Optionally, in some embodiments, the method further includes the following steps.

S1004: The first electronic device receives a seventh heartbeat packet.

The first electronic device may receive a heartbeat packet sent by a fifth electronic device by using a domain head network adapter, where the first electronic device is connected to the fifth electronic device.

S1005: If the seventh heartbeat packet is a heartbeat packet sent by the fifth electronic device and received by the first electronic device for the first time, the first electronic device updates the one-hop neighbor table of the first electronic device based on the seventh heartbeat packet.

For example, as described in Case 5, the electronic device 102 receives, for the first time, a heartbeat packet sent by the electronic device 101, the heartbeat packet is a domain information heartbeat packet, and the electronic device 102 may update a one-hop neighbor table based on the heartbeat packet.

Optionally, in some embodiments, the method further includes the following steps.

S1006: The first electronic device receives an eighth heartbeat packet.

The first electronic device may receive the eighth heartbeat packet sent by the fifth electronic device, where the eighth heartbeat packet is a heartbeat packet sent by the fifth electronic device by using a domain head network adapter after the seventh heartbeat packet is sent.

S1007: The first electronic device updates the one-hop neighbor table of the first electronic device based on the eighth heartbeat packet and forwards the eighth heartbeat packet through flooding.

After receiving the eighth heartbeat packet, the first electronic device may update the one-hop neighbor table based on the eighth heartbeat packet. The first electronic device is a key node, the eighth heartbeat packet is a domain information heartbeat packet sent by the fifth electronic device and received by the first electronic device for a non-first time, and the first electronic device may forward the eighth heartbeat packet through flooding.

In embodiments of this application, a role of an electronic device is defined. When the role of the electronic device is a key node, and a received heartbeat packet is a domain information heartbeat packet, the electronic device may forward the heartbeat packet through flooding, rather than all heartbeat packets are forwarded through flooding and all electronic devices forward a heartbeat packet through flooding, so that air interface resources are saved.

For example, as described in Case 6, after receiving again a heartbeat packet sent by the electronic device 101, the electronic device 102 may update a one-hop neighbor table based on the heartbeat packet and forward the heartbeat packet through flooding.

Optionally, in some embodiments, the method further includes the following steps.

S1008: The first electronic device receives a ninth heartbeat packet.

The fifth electronic device may receive the ninth heartbeat packet, where the ninth heartbeat packet is a heartbeat packet forwarded through flooding.

S1009: The first electronic device forwards the ninth heartbeat packet through flooding.

The first electronic device is a key node, and when receiving a heartbeat packet forwarded through flooding, the first electronic device may continue to forward the heartbeat packet through flooding.

For example, as described in case 7, the electronic device 102 receives a heartbeat packet forwarded by the electronic device 103 through flooding, and the electronic device 102 may continue to forward the heartbeat packet through flooding.

In embodiments of this application, a role of an electronic device is defined. When the role of the electronic device is a key node, and a domain information heartbeat packet is received, the electronic device may forward the first heartbeat packet through flooding, rather than all heartbeat packets are forwarded through flooding, so that air interface resources are saved.

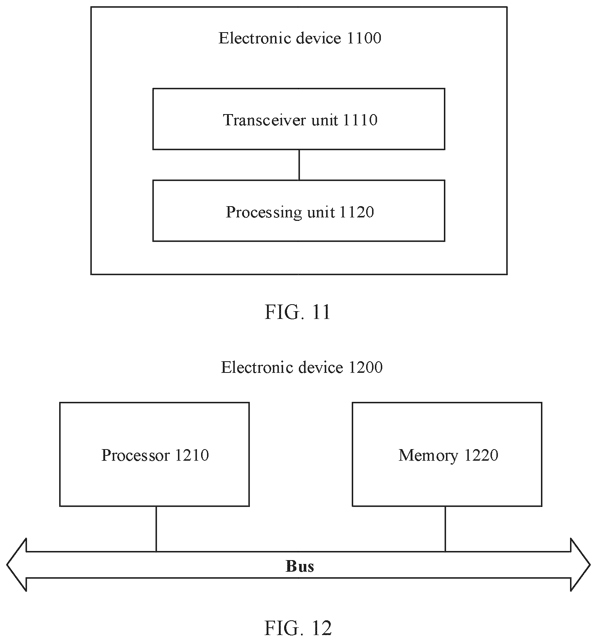

Apparatuses provided in embodiments of this application are described below in detail with reference to FIG. 11 and FIG. 12.

FIG. 11 is a diagram of a structure of an example electronic device 1100 according to an embodiment of this application.

For example, as shown in FIG. 11, the electronic device 1100 includes a transceiver unit 1110 and a processing unit 1120.

The transceiver unit 1110 is configured to receive a first heartbeat packet.

The processing unit 1120 is configured to: when determining that a network adapter for receiving the first heartbeat packet is a domain head network adapter, update a one-hop neighbor table and a two-hop neighbor table of the electronic device based on the first heartbeat packet.

In an implementation, the electronic device 1100 may be any electronic device described in the foregoing methods.

FIG. 12 is a diagram of a structure of an electronic device 1200 according to an embodiment of this application.

As shown in FIG. 12, the electronic device 1200 includes one or more processors 1210 and one or more memories 1220. The one or more memories 1220 store one or more computer programs, and the one or more computer programs include instructions. When the instructions are run by the one or more processors 1210, the electronic device 1200 is enabled to perform the technical solutions in the foregoing embodiments.

An embodiment of this application provides a communication system, including a first electronic device and a second electronic device. The system is configured to perform the technical solutions in the foregoing embodiments. Implementation principles and technical effects thereof are similar to those of the foregoing method embodiments. Details are not described herein again.

An embodiment of this application provides a computer program product. When the computer program product runs on a first electronic device, the first electronic device is enabled to perform the technical solutions in the foregoing embodiments. Implementation principles and technical effects thereof are similar to those of the foregoing method embodiments. Details are not described herein again.

An embodiment of this application provides a readable storage medium. The readable storage medium includes instructions. When the instructions are run on a first electronic device, the first electronic device is enabled to perform the technical solutions in the foregoing embodiments. Implementation principles and technical effects thereof are similar, and details are not described herein again.

An embodiment of this application provides a chip. The chip is configured to execute instructions. When the chip runs, the technical solutions in the foregoing embodiments are performed. Implementation principles and technical effects thereof are similar, and details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A system, wherein the system comprises a first electronic device and a second electronic device, and the first electronic device is connected to the second electronic device, wherein
the second electronic device is configured to send a first heartbeat packet;
the first electronic device is configured to receive the first heartbeat packet; and
the first electronic device determines that a network adapter for receiving the first heartbeat packet is a domain head network adapter, and is further configured to update a one-hop neighbor table and a two-hop neighbor table of the first electronic device based on the first heartbeat packet, wherein the domain head network adapter is a network adapter of a root node in a network topology.

2. The system according to claim 1, wherein when the first electronic device determines that the first electronic device is a central control node, the first electronic device is further configured to update a global network topology information table based on the first heartbeat packet, wherein the central control node is a node configured to establish the network topology.

3. The system according to claim 1 or 2, wherein the system further comprises a third electronic device, the second electronic device is connected to the third electronic device, a network adapter used by the third electronic device to send and receive a heartbeat packet is a non-domain head network adapter, the non-domain head network adapter is a network adapter of a leaf node in the network topology, a network adapter used by the second electronic device to send and receive a heartbeat packet is a non-domain head network adapter, and domain addresses of the second electronic device and the third electronic device are different;
the third electronic device is configured to send a second heartbeat packet;
the second electronic device is further configured to receive the second heartbeat packet;
the second electronic device is further configured to update a one-hop neighbor table of the second electronic device based on the second heartbeat packet, and determine that a role of the second electronic device is a key node, wherein the key node is a role in a cross-domain connection;
the third electronic device is further configured to receive the first heartbeat packet; and
the third electronic device is further configured to update a one-hop neighbor table of the third electronic device based on the first heartbeat packet, and determine that a role of the third electronic device is a key node.

4. The system according to claim 3, wherein the first electronic device is further configured to send a third heartbeat packet;
the second electronic device is further configured to receive the third heartbeat packet, and update the one-hop neighbor table of the second electronic device based on the third heartbeat packet;
the first electronic device is further configured to send a fourth heartbeat packet after sending the third heartbeat packet;
the second electronic device is further configured to receive the fourth heartbeat packet; and
the second electronic device is further configured to update the one-hop neighbor table of the second electronic device based on the fourth heartbeat packet, and forward the fourth heartbeat packet through flooding.

5. The system according to claim 3 or 4, wherein the system further comprises a fourth electronic device, the third electronic device is connected to the fourth electronic device, a network adapter used by the fourth electronic device to receive and send a heartbeat packet is a domain head network adapter, and the fourth electronic device is configured to send a fifth heartbeat packet;
the third electronic device is further configured to receive the fifth heartbeat packet;
the third electronic device is further configured to update the one-hop neighbor table of the third electronic device based on the fifth heartbeat packet;
the fourth electronic device is further configured to send a sixth heartbeat packet after sending the fifth heartbeat packet;
the third electronic device is further configured to receive the sixth heartbeat packet; and
the third electronic device is further configured to update the one-hop neighbor table of the third electronic device based on the sixth heartbeat packet, and forward the sixth heartbeat packet through flooding.

6. The system according to claim 5, wherein the first electronic device is the central control node, and the second electronic device is further configured to receive the sixth heartbeat packet forwarded by the third electronic device through flooding;
the second electronic device is further configured to forward the sixth heartbeat packet through flooding;
the first electronic device is further configured to receive the sixth heartbeat packet forwarded by the second electronic device through flooding; and
the first electronic device is further configured to update the global network topology information table of the first electronic device based on the sixth heartbeat packet, and forward the sixth heartbeat packet through flooding.

7. A network topology method, wherein the method comprises:
receiving, by a first electronic device, a first heartbeat packet; and
determining, by the first electronic device, that a network adapter for receiving the first heartbeat packet is a domain head network adapter, and updating a one-hop neighbor table and a two-hop neighbor table of the first electronic device based on the first heartbeat packet, wherein the domain head network adapter is a network adapter of a root node in a network topology.

8. The method according to claim 7, wherein when the first electronic device determines that the first electronic device is a central control node, wherein the central control node is a node configured to establish the network topology, the method further comprises:
updating, by the first electronic device, the one-hop neighbor table, the two-hop neighbor table, and a global network topology information table of the first electronic device based on the first heartbeat packet.

9. The method according to claim 8, wherein the network adapter used by the first electronic device to receive the first heartbeat packet is the domain head network adapter, and the method further comprises:
receiving, by the first electronic device, a sixth heartbeat packet, wherein the sixth heartbeat packet is a heartbeat packet forwarded by a second electronic device through flooding; and
updating, by the first electronic device, the global network topology information table of the first electronic device based on the sixth heartbeat packet, and forwarding the sixth heartbeat packet through flooding.

10. The method according to claim 7, wherein when the first electronic device determines that the network adapter for receiving the first heartbeat packet is a non-domain head network adapter, the first heartbeat packet is a heartbeat packet sent by a second electronic device by using the non-domain head network adapter, the non-domain head network adapter is a network adapter of a leaf node in the network topology, the first electronic device is connected to the second electronic device, and domain addresses of the first electronic device and the second electronic device are different; and the method further comprises:
determining, by the first electronic device, that a role of the first electronic device is a key node, wherein the key node is a role in a cross-domain connection.

11. The method according to claim 10, wherein the method further comprises:
receiving, by the first electronic device, a seventh heartbeat packet, wherein the seventh heartbeat packet is a heartbeat packet sent by a fifth electronic device by using a domain head network adapter, and the first electronic device is connected to the fifth electronic device; and
if the seventh heartbeat packet is a heartbeat packet sent by the fifth electronic device and received by the first electronic device for the first time, updating, by the first electronic device, the one-hop neighbor table of the first electronic device based on the seventh heartbeat packet.

12. The method according to claim 11, wherein the method further comprises:
receiving, by the first electronic device, an eighth heartbeat packet, wherein the eighth heartbeat packet is a heartbeat packet sent by the fifth electronic device by using a domain head network adapter after the seventh heartbeat packet is sent; and
updating, by the first electronic device, the one-hop neighbor table of the first electronic device based on the eighth heartbeat packet, and forwarding the eighth heartbeat packet through flooding.

13. The method according to any one of claims 10 to 12, wherein the method further comprises:
receiving, by the first electronic device, a ninth heartbeat packet, wherein the ninth heartbeat packet is a heartbeat packet forwarded through flooding; and
forwarding, by the first electronic device, the ninth heartbeat packet through flooding.

14. The method according to any one of claims 7 to 13, wherein the determining, by the first electronic device, that a network adapter for receiving the first heartbeat packet is a domain head network adapter, and updating a one-hop neighbor table and a two-hop neighbor table of the first electronic device based on the first heartbeat packet comprises:
determining, by the first electronic device, that the network adapter for receiving the first heartbeat packet is the domain head network adapter and a preset condition is met, and updating the one-hop neighbor table and the two-hop neighbor table of the first electronic device based on the first heartbeat packet.

15. The method according to claim 14, wherein the preset condition comprises that the first electronic device receives the first heartbeat packet for the first time, and further comprises one of the following: the network adapter used by the first electronic device to receive the first heartbeat packet is an access point AP network adapter, a network adapter for sending the first heartbeat packet is a station STA network adapter, and a source network adapter media access control MAC address in the first heartbeat packet has been associated with a STA list of the AP network adapter of the first electronic device; or
the network adapter used by the first electronic device to receive the first heartbeat packet is a master master network adapter, a network adapter for sending the first heartbeat packet is a slave slave network adapter, and a source network adapter MAC address in the first heartbeat packet has been associated with a slave list of the first electronic device; or
the network adapter used by the first electronic device to receive the first heartbeat packet is a STA network adapter, a network adapter for sending the first heartbeat packet is an AP network adapter, and a source network adapter MAC address in the first heartbeat packet is the same as a MAC address of an AP network adapter associated with the STA network adapter of the first electronic device; or
the network adapter used by the first electronic device to receive the first heartbeat packet is a slave network adapter, a network adapter for sending the first heartbeat packet is a master network adapter, and a source network adapter MAC address in the first heartbeat packet is the same as a MAC address of a master network adapter associated with the slave network adapter of the first electronic device; or
the network adapter used by the first electronic device to receive the first heartbeat packet is a STA network adapter, and a network adapter for sending the first heartbeat packet is a STA network adapter.

16. An electronic device, comprising a module configured to implement the method according to any one of claims 7 to 15.

17. An electronic device, comprising one or more processors and one or more memories, wherein the one or more memories store one or more computer programs, the one or more computer programs comprise instructions, and when the instructions are executed by the one or more processors, the method according to any one of claims 7 to 15 is performed.

18. A chip, wherein the chip comprises a processor and a communication interface, the communication interface is configured to receive a signal and transmit the signal to the processor, and the processor processes the signal, to enable the method according to any one of claims 7 to 15 to be performed.

19. A computer-readable storage medium, wherein the computer-readable storage medium stores computer instructions, and when the computer instructions are run on a computer, the method according to any one of claims 7 to 15 is performed.

20. A computer program product comprising instructions, wherein when the computer program product runs on a computer, the computer is enabled to perform the method according to any one of claims 7 to 15.
